# EUROPÄISCHE PATENTANMELDUNG

(11) **EP 4 362 121 A1**
(43) Veröffentlichungstag der Anmeldung: **01.05.2024**
(21) Anmeldenummer: 22204480.2
(22) Anmeldetag: 28.10.2022
(51) Int. Cl.: H01M 4/00

(54) **VERFAHREN UND ANORDNUNG ZUR HERSTELLUNG EINER ELEKTRODENSUSPENSION**

(71) Anmelder: Coperion GmbH, 70469 Stuttgart (DE)
(72) Erfinder: Dr. Heyn, Johannes, 73776 Altbach (DE); Fiedler, Markus, 75446 Wiernsheim (DE); Prof. Kwade, Arno, 38176 Wendeburg (DE); Weber, Marcel, 38110 Braunschweig (DE)
(74) Vertreter: Rau, Schneck & Hübner Patentanwälte Rechtsanwälte PartGmbB

(57) **Zusammenfassung**

Es werden ein Verfahren und eine Anordnung (1) zur Herstellung einer Elektrodensuspension beschrieben. Rezepturbestandteile (A, B, C, D) der Elektrodensuspension werden bereitgestellt und zu der Elektrodensuspension vermischt. Mindestens eine optische Messung wird an der Elektrodensuspension durchgeführt, wobei jeweils ein Spektrum der Elektrodensuspension über zumindest einen Teilbereich des ultravioletten, sichtbaren und/oder infraroten Frequenzbereichs erfasst wird. Die mindestens eine optische Messung wird ausgewertet. Die Elektrodensuspension wird in Abhängigkeit von der Auswertung weiter behandelt.

## Beschreibung

Die vorliegende Erfindung betrifft ein Verfahren zur Herstellung einer Elektrodensuspension. Weiterhin betrifft die Erfindung eine Anordnung zur Herstellung einer Elektrodensuspension.

Elektrodensuspensionen werden in der Herstellung von galvanischen Energiespeichen, beispielsweise von Batterien und/oder Akkumulatoren, verwendet. Die Elektrodensuspension dient hierbei zur Beschichtung eines Elektrodengrundmaterials. Diesbezüglich kann zwischen Anodensuspensionen und Kathodensuspensionen unterschieden werden. Elektrodensuspensionen werden auch als Batteriesuspensionen, Batterieslurries, Elekrodenpasten oder Katalysatordispersionen bezeichnet.

Verfahren zur Herstellung von Elektrodensuspensionen sind bekannt. Rezepturbestandteile der Elektrodensuspension werden zu einer Suspension vermischt. Unterschiedliche Elektrodensuspensionen, insbesondere Anoden- und Kathodensuspensionen sowie Katalysatordispersionen, unterscheiden sich in der Auswahl der jeweiligen Rezepturbestandteile und deren Zusammensetzung. Die Herstellung der Suspension erfolgt derzeit überwiegend im Batch-Verfahren.

Für die Qualität der Elektrodensuspension sind insbesondere die Auswahl der korrekten Bestandteile, deren Eigenschaften, beispielsweise die Partikelgröße von Feststoffbestandteilen, deren Mischungsverhältnis und/oder die Dispergiergüte entscheidend. Es ist daher bekannt, die Elektrodensuspension vor deren Weiterverarbeitung, insbesondere vor einer Beschichtung der Elektroden mit der Elektrodensuspension, zu überprüfen.

Es ist eine Aufgabe der vorliegenden Erfindung, ein Verfahren zur Herstellung einer Elektrodensuspension zu verbessern, insbesondere ein Verfahren bereitzustellen, das die Herstellung der Elektrodensuspension mit einer Soll-Qualität gewährleistet und einen Ausschuss verringert.

Diese Aufgabe ist gelöst durch ein Verfahren mit den in Anspruch 1 angegebenen Schritten. Die Rezepturbestandteile der Elektrodensuspension werden bereitgestellt und zu der Elektrodensuspension vermischt. An der Elektrodensuspension wird mindestens eine optische Messung durchgeführt, wobei jeweils ein Spektrum der Elektrodensuspension über zumindest einen Teilbereich des ultravioletten, sichtbaren und/oder infraroten, insbesondere nahinfraroten, Frequenzbereiches erfasst wird. Die mindestens eine optische Messung wird ausgewertet. Die Elektrodensuspension wird in Abhängigkeit von der Auswertung weiter behandelt.

Erfindungsgemäß wurde erkannt, dass eine zuverlässige Charakterisierung der Elektrodensuspension anhand der Auswertung der mindestens einen optischen Messung erfolgen kann. Insbesondere sind durch die mindestens eine optische Messung und deren Auswertung die Eigenschaften eines oder mehrerer Rezepturbestandteile, das Mischungsverhältnis der Rezepturbestandteile und/oder die Dispergiergüte effizient und zuverlässig überprüfbar.

Die Weiterbehandlung der Elektrodensuspension erfolgt in Abhängigkeit von der Auswertung der mindestens einen optischen Messung. Beispielsweise kann bei Erkennen von Abweichungen von Soll-Eigenschaften, insbesondere von einem Unterschreiten oder Überschreiten einer Soll-Qualität, die Elektrodensuspension ausgeschleust und/oder einer Aufbereitung unterzogen werden, beispielsweise durch Zusatz weiterer Rezepturbestandteile und/oder ein längeres Vermischen. Werden Soll-Eigenschaften, insbesondere eine Soll-Qualität, ausreichend eingehalten, kann die Elektrodensuspension insbesondere weiteren Bearbeitungsschritten zugeführt werden, beispielsweise zur Beschichtung von Elektrodengrundmaterial verwendet werden.

Vorteilhafterweise erfolgt die mindestens eine optische Messung direkt an der Elektrodensuspension. Das Ausschleusen und/oder Aufbereitung von Proben, beispielsweise durch ein Verdünnen und/oder Zentrifugieren, ist nicht erforderlich. Dies ermöglicht eine besonders zeiteffiziente und effektive Messung. Die Messung und deren Aussagekraft werden nicht durch die Aufbereitung einer Probe beeinflusst.

Die Durchführung mindestens einer optischen Messung ist besonders vorteilhaft. Das Vermessen eines Spektrums hat den Vorteil, dass relevante Eigenschaften der Elektrodensuspension, beispielsweise Rezepturbestandteile, deren Mischungsverhältnis und/oder der Dispergiergüte, durch eine einzige Messung ermittelbar sind. Dies ermöglicht eine effiziente Überprüfung der Elektrodensuspension. Eine Überprüfung der Elektrodensuspension ist insbesondere nicht auf einzelne mechanische oder rheologische Eigenschaften eingeschränkt.

Die optische Messung hat zudem den Vorteil, dass diese die Elektrodensuspension, insbesondere einen Suspensionsstrom, kaum bzw. nicht beeinflusst. Insbesondere sind keine mechanischen und/oder rheologischen Messungen, beispielsweise mittels eines Viskosimeters, erforderlich, die nachteilige Auswirkungen auf einen Suspensionsstrom haben können. Damit eignet sich die mindestens eine optische Messung insbesondere für in-line-Anwendungen.

Ein weiterer Vorteil der mindestens einen optischen Messung besteht in deren einfachen Skalierbarkeit.

Ein weiterer Vorteil der mindestens einen optischen Messung besteht in deren geringerer Fehleranfälligkeit, insbesondere im Vergleich zur mechanischen und/oder rheologischen Messungen. Insbesondere ist eine Verfälschung der Messung durch Beschädigungen und/oder Verschmutzungen mechanischer Messapparaturen, beispielsweise durch ein Verschmutzen und Zusetzen von rotierenden Teilen eines Viskosimeters, vermieden.

Die Messung kann an der fertigen Elektrodensuspension oder an vorgelagerten Verfahrensschritten erfolgen. Beispielsweise können unterschiedliche Rezepturbestandteile der Elektrodensuspension sukzessive zugegeben und eingemischt werden. Die mindestens eine optische Messung kann in unterschiedlichen Verfahrensabschnitten, insbesondere an Zwischenprodukten, beispielsweise nach dem Einmischen einzelner Rezepturbestandteile, erfolgen. Bevorzugt erfolgt die mindestens eine optische Messung nach dem Bereitstellen und Vermischen aller relevanten Rezepturbestandteile. Es können auch optische Messungen zu unterschiedlichen Verfahrensstadien durchgeführt werden. Hierdurch können fehlerhafte Rezepturbestandteile und/oder Mischungsverhältnisse und/oder Dispergiergüten und/oder Entmischungen frühzeitig erkannt werden. Ein Ausschuss wird vermindert. Eine Zugabe weiterer Rezepturbestandteile in minderqualitative Zwischenstufen wird vermieden.

Das Bereitstellen und Vermischen der Rezepturbestandteile der Elektrodensuspension ist an sich bekannt. Insbesondere sind geeignete Rezepturen zur Herstellung von Elektrodensuspensionen, insbesondere Anoden- und/oder Kathodensuspensionen, bekannt.

Bekannte Rezepturen für Elektrodensuspensionen weisen insbesondere ein Lösungsmittel, mindestens ein leitfähiges Additiv, mindestens ein elektrochemisch aktives Material und/oder mindestens einen Binder auf. Zusätzlich können weitere Additive und/oder Prozesshilfsmittel hinzugegeben werden.

Geeignete Lösungsmittel sind beispielsweise Wasser, insbesondere destilliertes, demineralisiertes, deionisiertes und/oder voll entsalztes Wasser, N-Methyl-2-pyrrolidon (NMP) und/oder N-Ethyl-2-pyrrolidon (NEP), Triethylphosphat (TEP), Isopropanol oder Xylol.

Geeignete leitfähige Additive sind beispielsweise Ruß, Graphit, Graphen, Kohlenstoffnanoröhrchen (CNT und/oder MWCNT). Das leitfähige Additiv liegt insbesondere als Feststoff, insbesondere als Feststoffpartikel, vor. Verschiedene leitfähige Additive können sich insbesondere in der Partikelgröße der Feststoffpartikel unterscheiden.

Als elektrochemisch aktives Material können beispielsweise Graphit, Silicium, Silicium-Komposite, Lithium-Nickel-Mangan-Cobalt-Oxide, Lithium-Cobalt-Oxid, Lithium-Mangan-Oxid-Spinell, Lithium-Eisen-Phosphat, Lithium-Nickel-Cobalt-Aluminium-Oxid, Lithium-Titanat-Oxid, Lithium-Aluminium-Legierungen, Lithium-Magnesium-Legierungen, Lithium-Silizium-Legierungen, Lithium-Zinn-Legierungen, Natrium-Eisen-Phosphat und/oder Lithium-Hexafluorophosphat eingesetzt werden. Das elektrochemisch aktive Material wird im Folgenden auch als Aktivmaterial bezeichnet. Der Anteil des Aktivmaterials kann insbesondere abhängig von der Art der Elektrodensuspension, insbesondere der Anoden- und/oder Kathodensuspension gewählt werden. Beispielhafte Anodensuspensionen weisen einen Anteil des Aktivmaterials im Bereich von 30 Ma.-% bis 70 Ma.% auf. Beispielhafte Kathodensuspensionen weisen Aktivmaterial im Bereich zwischen 50 Ma.-% und 90 Ma.-% auf.

Geeignete Binder sind beispielsweise Acrylnitril-Butadien-Kautschuk (NBR), Styrol-Butadien-Kautschuk (SBR), Carboxymethylcellulosen (CMC), Polyacrylsäure (PPA), Polyvinylidenfuorid (PVDF) und/oder Polytetrafluorethylen (PTFE).

Das Vermischen der Rezepturbestandteile kann beispielsweise in geeigneten Mischern und/oder kontinuierlich, insbesondere mittels mindestens eines Extruders, erfolgen.

Die mindestens eine optische Messung kann in Transmissions- und/oder Reflexionsanordnung erfolgen. Bevorzugt erfolgt die mindestens eine optische Messung in Reflexionsanordnung. Insbesondere werden Remissionswerte der Elektrodensuspension erfasst. Beispielsweise kann eine Messvorrichtung zur Durchführung der mindestens einen optischen Messung ein Spektrometers, insbesondere ein Spektralphotometer, aufweisen. Bevorzugt kann eine Messvorrichtung, insbesondere ein Sensor der Messvorrichtung, Licht des zu vermessenden Frequenzbereichs, bevorzugt mittels einer standardisierten Beleuchtung, in die Elektrodensuspension einstrahlen und hierauf zurückgehende Sekundärstrahlung, insbesondere transmittiertes und/oder reflektiertes Licht, beispielsweise Remissionsstrahlung, detektieren.

Bei der mindestens einen optischen Messung wird ein Spektrum der Elektrodensuspension erfasst. Das Spektrum kann eine oder mehrere Frequenzen oder Frequenzbänder umfassen. Bevorzugt ist das Spektrum ein kontinuierliches Spektrum. Das Spektrum wird zumindest über einen Teilbereich des ultravioletten, sichtbaren und/oder infraroten, insbesondere nahinfraroten, Frequenzbereichs erfasst. Bevorzugt wird zumindest ein Teilbereich des sichtbaren Lichts erfasst, insbesondere der gesamte Frequenzbereich des sichtbaren Lichts abgedeckt. Das sichtbare Licht entspricht insbesondere einem Wellenlängenbereich von etwa 380 nm bis etwa 780 nm. Das erfasste Spektrum kann sich zusätzlich oder alternativ auf den Infrarotbereich, insbesondere Nahinfrarotbereich, insbesondere auf den Wellenlängenbereich von 780 nm bis 3000 nm, und/oder UV-Bereich, insbesondere auf den Wellenlängenbereich von 100 nm bis 380 nm, erstrecken.

Die Auswertung der mindestens einen optischen Messung erfolgt insbesondere anhand des jeweiligen erfassten Spektrums und/oder mindestens eine hieraus ermittelte Kenngröße. Beispielsweise ist möglich, die mindestens eine optische Messung jeweils einzeln auszuwerten. Es ist auch möglich, mehrere optische Messungen gemeinsam auszuwerten, beispielsweise in dem die entsprechenden Spektren und/oder hieraus ermittelte Kenngrößen miteinander verglichen werden. Beispielsweise können zwei an unterschiedlichen Zeitpunkten und/oder Positionen gemessene Spektren und/oder hieraus ermittelte Kenngrößen miteinander verglichen werden. Insbesondere kann ein zeitlicher Verlauf des Spektrums und/oder der mindestens einen Kenngröße ermittelt werden. Dies ermöglicht eine besonders frühzeitige Erkennung von Änderungen an der Elektrodensuspension, insbesondere an deren Zusammensetzung. Der zeitliche Vergleich erlaubt auch, prozessimmanente Schwankungen, beispielsweise bei Anfahrprozessen und/oder ein Prozessende, zu erkennen. Die mindestens eine optische Messung kann auch jeweils einzeln ausgewertet werden, insbesondere in dem das jeweilige Spektrum und/oder die jeweilige mindestens eine Kenngröße mit Soll-Spektren und/oder mindestens einer entsprechenden Soll-Kenngröße verglichen werden.

Bevorzugt können Eigenschaften des erfassten Spektrums und/oder der mindestens einen Kenngröße einzelnen Rezepturbestandteilen und/oder Prozessparametern zugeordnet werden. Beispielsweise können ein oder mehrere Peaks des Spektrums einem bestimmten Rezepturbestandteil zugeordnet werden. Eine Änderung der Höhe des Peaks und/oder eine Fläche unterhalb des Peaks kann einer Änderung bezüglich des jeweiligen Bestandteils zugeordnet werden, beispielsweise eine Erhöhung oder Verringerung des Anteils des Rezepturbestandteils in der Elektrodensuspension. Zusätzlich oder alternativ kann eine Gesamtfläche unter dem Spektrum ermittelt werden. Hierdurch kann insbesondere eine Gesamtintensität des erfassten Lichts, insbesondere des reflektierten und/oder transmittierten Lichts, in dem zur optischen Messung herangezogenen Frequenzbereichs ermittelt werden. Dies erlaubt beispielsweise Rückschlüsse auf die optische Dichte des Materials und damit auf die Dichte und/oder die Größe von Feststoffpartikeln, insbesondere von Ruß- und/oder Graphitpartikeln.

Besonders bevorzugt erfolgt die Auswertung anhand von mindestens einer aus dem Spektrum ermittelten Kenngröße. Als besonders geeignet hat sich eine Auswertung anhand von Farbwerten erwiesen. Mit Hilfe der mindestens einen optischen Messung kann insbesondere eine Farbe der Elektrodensuspension bestimmt werden. Beispielsweise kann mittels der mindestens einen optischen Messung ein Spektrum über den sichtbaren Frequenzbereich erfasst und, insbesondere zur Bestimmung von Farbwerten, ausgewertet werden. Die Erfinder haben erkannt, dass anhand der Farbe zuverlässig Soll-Eigenschaften der Elektrodensuspension überprüft werden können. Farbabweichungen, insbesondere Abweichungen in einzelnen Farbkoordinaten, können vorzugsweise einzelnen Rezepturbestandteile und/oder Prozessparametern zugeordnet werden. Die Auswertung anhand von Farbwerten ist besonders intuitiv und effizient.

Mit Hilfe der Auswertung der mindestens einen optischen Messung kann die Einhaltung von Soll-Parametern bei der Herstellung der Elektrodensuspension, insbesondere eine Qualität der Elektrodensuspension, effizient und einfach überprüft werden. Die Auswertung erlaubt eine Qualitätskontrolle unabhängig von anderen, eventuell vorzuschaltenden Tests. Hierdurch ist es insbesondere möglich, die Elektrodensuspension nach ein oder mehreren Qualitätskriterien zu beurteilen. Bevorzugt kann die Elektrodensuspension anhand der Auswertung in unterschiedliche Qualitätsstufen eingeteilt werden. Insbesondere kann überprüft werden, ob die Elektrodensuspension eine Soll-Qualität erfüllt. Wird ein Unterschreiten oder Überschreiten der Soll-Qualität detektiert, kann die Elektrodensuspension einfach und effizient ausgeschleust werden. Mit Hilfe der mindestens einen optischen Messung können Produktionsfehler frühzeitig entdeckt werden. Hierdurch ist der Ausschuss insgesamt vermindert. Das Herstellungsverfahren ist zeit, material- und/oder energieeffizient.

Ein Verfahren nach Anspruch 2 ermöglicht eine besonders intuitive und zuverlässige Auswertung der mindestens einen optischen Messung. Ein Farbraum ist die Gesamtheit aller Farben, die in einem Farbmodell darstellbar sind. Abhängig von dem zugrundeliegenden Farbmodel hat der Farbraum eine bestimmten Dimensionalität, im Regelfall drei oder vier Dimensionen. Der Farbort ist ein Punkt des Farbraums, dem eine bestimmte Farbe zugeordnet ist. Der Farbort wird durch den Dimensionen des Farbraums entsprechende Farbkoordinaten definiert. Der Farbort und die zugehörigen Farbkoordinaten stellen daher Kenngrößen dar, die aus dem in der mindestens einen optischen Messung erfassten Spektrum, insbesondere aus einem über den gesamten Frequenzbereich des optischen Lichts erfassten Spektrum, ermittelbar sind. Auf Basis der mindestens einen optischen Messung kann beispielsweise eine Farbauswertung zur Bestimmung mindestens einer Farbkoordinate, insbesondere der Farbkoordinaten des Farborts, in einen geeigneten Farbraum erfolgen. Die mindestens eine optische Messung kann bevorzugt eine Farbmessung sein. Die Bestimmung der mindestens einen Farbkoordinate, insbesondere des Farborts, kann insbesondere über Spektralphotometrie, beispielsweise mit Hilfe eines Spektralphotometers erfolgen.

Erfindungsgemäß wurde erkannt, dass sich wesentliche Informationen des Farbspektrums in der niederdimensionalen Darstellung mindestens einer Farbkoordinate, insbesondere des Farborts, darstellen lassen. Durch eine Auswertung anhand der mindestens einen Farbkoordinate, insbesondere des Farborts, können aussagekräftige Rückschlüsse auf Eigenschaften der Elektrodensuspension, insbesondere deren Rezepturbestandteile und/oder das Mischungsverhältnis und/oder die Dispergiergüte, getroffen werden. Beispielsweise können unterschiedliche Rezepturen, insbesondere unterschiedliche Rezepturbestandteile und/oder Mischungsverhältnisse, durch deren jeweiligen Einfluss auf die Farbe der Elektrodensuspension anhand von der mindestens einen Farbkoordinate unterschieden werden. Insbesondere haben die Erfinder erkannt, dass einzelne Rezepturbestandteile und/oder Prozessparameter verschiedene Auswirkungen auf unterschiedliche Farbkoordinaten haben, so dass die Ergebnisse der Auswertung den jeweiligen Rezepturbestandteilen und/oder Prozessparametern zugeordnet werden können. Dies ermöglicht eine einfache, intuitive und effiziente Auswertung. Die Auswertung kann beispielsweise visuell durch Abgleich des Farborts mit einem Soll-Farbort erfolgen.

Die Auswertung anhand des Farborts kann insbesondere eine Auswertung anhand der zugehörigen Farbkoordinaten, insbesondere einer einzelnen Auswertung dieser Farbkoordinaten, erfolgen. Beispielsweise kann die Auswertung durch Abgleich der mindestens einen Farbkoordinate mit einer Soll-Farbkoordinate und/oder des Farborts mit einem Soll-Farbort erfolgen.

Die Wahl des konkreten Farbmodels und damit des Farbraums ist für die Auswertung unerheblich. Prinzipiell können alle geeigneten Farbräume, beispielsweise RGB, CMY, CMYK, HSV, HSL, HSB, HSI und/oder Lab-Farbräume, verwendet werden. Als besonders geeignet hat sich der L^{∗}a^{∗}b^{∗}-Farbraum, auch CIELAB-Farbraum genannt, erwiesen. Der CIELAB-Farbraum ist genormt in EN ISO 11664-4. Der CIELAB-Farbraum ist ein dreidimensionaler Farbraum, in welchem jede Farbe durch einen Farbort mit kartesischen Koordinaten L^{∗}, a^{∗} und b^{∗} definiert ist. Die a^{∗}b^{∗}-Koordinatenebene fundiert auf der Gegenfarbtheorie, wobei sich auf der a^{∗}-Achse grün und rot gegenüberliegen und auf der b^{∗}-Achse blau und gelb. Die L^{∗}-Koordinate beschreibt die Helligkeit.

Im Folgenden wird beispielhaft eine Auswertung einer Farbmessung erläutert. Beispielsweise können mehrere Messungen nacheinander und/oder an verschiedenen Positionen durchgeführt werden. Insbesondere zeitliche Änderungen in einer oder mehrere Farbkoordinaten deuten auf einen instationären Prozess hin, beispielsweise aufgrund eines Anfahrens der Mischvorrichtung, aufgrund von Dosierschwankungen, aufgrund von Dosierausfällen, aufgrund von Brückenbildung in der Rohstoffzuführung, aufgrund zugesetzter Entgasungen und/oder aufgrund von Drehzahländerungen. Zeitlich und/oder räumlich konstante Werte der mindestens einen Farbkoordinate zeigen auf stationäre Prozesse hin, beispielsweise nach einem Abschluss des Anfahrens und/oder nach einer homogenen Einarbeitung der Rezepturbestandteile in die Elektrodensuspension. Schwankungen, insbesondere räumliche Schwankungen, der mindestens einen Farbkoordinate lassen auf die Disperiergüte rückschließen.

Im Folgenden werden die Auswirkungen einzelner Rezepturbestandteile auf die Auswertung der Farbmessung am Beispiel des CIELAB-Farbraums beschrieben. Die b^{∗}-Farbkoordinate erlaubt insbesondere Rückschlüsse auf die Art, Menge und/oder Einarbeitung der Binderanteile in der Elektrodensuspension. Beispielsweise können Änderungen der b^{∗}-Farbkoordinate eine Änderung des Binderanteils, beispielsweise aufgrund von Dosierschwankungen, anzeigen. Die a^{∗}-Farbkoordinate erlaubt insbesondere Rückschlüsse auf die Art, Menge und/oder Einarbeitung Aktivmaterials, insbesondere Silizium, in der Elektrodensuspension. Beispielsweise können Änderungen der a^{∗}-Farbkoordinate eine Änderung des Anteils des Aktivmaterials, insbesondere des Silizium-Anteils, beispielsweise aufgrund von Dosierschwankungen, anzeigen. Aus der L^{∗}-Farbkoordinate können insbesondere Rückschlüsse auf den Anteil und/oder die Partikelgröße des leitfähigen Additivs, insbesondere Ruß und/oder Graphit, gezogen werden. Beispielsweise deutet eine Verringerung des L^{∗}-Wertes an, dass der Anteil des leitfähigen Additivs steigt. Bei gleichbleibendem Anteil des leitfähigen Additivs kann eine Änderung der L^{∗}-Werte eine Änderung der Partikelgröße, insbesondere hin zu kleineren Partikelgrößen, andeuten.

Die obigen Beispiele sollen die Möglichkeit der Auswertung der mindestens einen optischen Messung anhand mindestens einer Farbkoordinate und die hieraus ableitbaren Rückschlüsse erläutern. Die obigen Beispiele sind nicht einschränkend zu verstehen. Eine entsprechende Auswertung kann auch anhand mindestens einer Farbkoordinate eines anderen Farbraumes erfolgen. Insbesondere können Zusammenhänge der jeweiligen Farbkoordinaten mit Rezepturbestandteilen und/oder Prozessparametern auch für anderer Farbräume definiert werden. Beispielsweise ist es möglich, bei einer Kalibrierung der Messung die Änderung der mindestens einen Farbkoordinate in Abhängigkeit von bekannten Rezeptur- und/oder Prozessänderungen zu bestimmen.

Ein Verfahren nach Anspruch 3 ist besonders präzise und effizient. Die Farbabweichung ermöglicht auf einfache und genaue Weise eine Quantifizierung der zu überprüfenden Eigenschaften der Elektrodensuspension. Die Farbabweichung kann insbesondere für jede Farbkoordinate ermittelt werden. Es ist auch möglich, die Farbabweichung für den insgesamt Farbort zu bestimmen. Beispielsweise ist möglich einen Farbabstand, beispielsweise einen ΔE-Farbabstand zu bestimmen. Der ΔE-Farbabstand ist beipielsweise nach DIN EN ISO 11664-6 normiert. Mit Hilfe der Farbabweichung kann eine Abweichung von der Soll-Farbkoordinate, insbesondere von dem Soll-Farbort, quantifiziert werden. Hierdurch ist eine Quantifizierung der Abweichung der jeweiligen Eigenschaften von Soll-Eigenschaften, insbesondere von einer Soll-Qualität möglich.

Bevorzugt können ein oder mehrere Grenzwerte für die Farbabweichung, insbesondere für die Farbabweichung je Farbkoordinate definiert werden. Durch Abgleich der Farbabweichung mit dem mindestens einen Grenzwert kann eine Kategorisierung der Elektrodensuspension erfolgen. Beispielsweise kann ein Grenzwert definiert werden, der eine Unterscheidung zwischen verschiedenen Qualitätsstufen ermöglicht. Unterhalb des Grenzwertes wird die Soll-Qualität als eingehalten angesehen. Überschreitet die Farbabweichung den Grenzwert kann die Elektrodensuspension als qualitativ minderwertig beurteilt und ausgeschleust werden.

Bevorzugt können mehrere Grenzwerte definiert werden, um zwischen verschiedenen Qualitätsstufen zu unterscheiden. Beispielsweise können zwei Grenzwerte, insbesondere zwei Grenzwerte je Farbkoordinate, definiert werden. Ein erster Grenzwert kann zwischen einer ersten Qualitätsstufe (Qualität Q1) und einer zweiten Qualitätsstufe (Qualität Q2) unterscheiden. Der zweite Grenzwert kann eine dritte Qualitätsstufe (Qualität Q3) von der zweiten Qualitätsstufe abgrenzen. Während Elektrodensuspensionen der Qualität Q1 direkt weiterverarbeitet werden können, kann eine Elektrodensuspension der Qualität Q2 einer Nachbearbeitung zugeführt werden, in der durch weitere Bearbeitungsschritte die Qualität verbessert wird. Eine Elektrodensuspension der Qualität Q3 kann als Ausschuss betrachtet und ausgeschleust werden. Die ausgeschleuste Elektrodensuspension kann dem Prozess vollständig entzogen und/oder, insbesondere in verdünnter Form, dem Prozess als Ausgangsstoff zugeführt werden.

Soll-Werte und/oder Grenzwerte können bevorzugt rezeptur- und/oder prozessabhängig definiert werden. Beispielsweise können die Soll-Werte und/oder Grenzwerte mittels vorhandener Daten und/oder Kalibrierungsmessungen zu der jeweiligen Rezeptur und/oder dem jeweiligen Prozess bestimmt werden. Insbesondere können aus Daten früherer Produktionslose und/oder Daten aus Kalibrierungsmessungen statistische Werte abgeleitet werden, um Soll-Werte und/oder Grenzwerte zu bestimmen. Beispielsweise kann ein Mittelwert als Soll-Wert und/oder eine Verteilungsbreite, beispielsweise 3 oder 6 Sigma, als Toleranzbereich, insbesondere als Grenzwert, verwendet werden. Beispielsweise kann ein erster Grenzwert, insbesondere zwischen Qualität Q1 und Q2, zu 3 Sigma und ein zweiter Grenzwert, insbesondere zwischen Qualität Q2 und Q3, zu 6 Sigma gewählt werden.

Ein Verfahren nach Anspruch 4 ist besonders effizient und wirtschaftlich. Die kontinuierliche Herstellung der Elektrodensuspension überwindet die Nachteile gängiger Batch-Verfahren, insbesondere kleine Batch-Mengen, erhöhte Qualitätsschwankungen zwischen einzelnen Batches und den großen Platzbedarf im Falle mehrerer Batch-Linien. Die mindestens eine optische Messung eignet sich besonders für die kontinuierliche Herstellung der Elektrodensuspension, insbesondere da direkt an der Elektrodensuspension und nicht an abgezweigten und/oder aufbereiteten Proben gemessen wird. Zudem ist die mindestens eine optische Messung und deren Auswertung leicht in Abhängigkeit von dem Herstellungsprozess skalierbar. Hierdurch ist eine zuverlässige, insbesondere im Wesentlichen kontinuierliche, Überprüfung des kontinuierlichen Herstellungsprozesses möglich.

Die kontinuierliche Herstellung der Elektrodensuspension kann insbesondere mit mindestens einem Extruder erfolgen. Prinzipiell können beliebige Extruder für die kontinuierliche Herstellung der Elektrodensuspension verwendet werden. Die Art, die Ausgestaltung und/oder das Betriebsverfahren des Extruders können insbesondere abhängig von der herzustellenden Elektrodensuspension gewählt werden. Beispielsweise können gleichlaufende, gegenlaufende, dichtkämmende, nicht-dichtkämmende und/oder konische Extruder verwendet werden. Der Extruder kann eine, zwei oder mehrere Wellen aufweisen. Vorzugsweise ist der Extruder als Mehrwellen-Extruder, insbesondere als gleichlaufender Zweiwellen-Extruder ausgebildet. Bevorzugt kann die kontinuierliche Herstellung mit Hilfe eines gleichlaufenden, dichtkämmenden Zweiwellen-Extruders bzw. Doppelschneckenextruders durchgeführt werden. Auch der Einsatz von Ko-Knetern ist möglich. Der mindestens eine Extruder kann modular aufgebaut sein und die Zugabe der einzelnen Rezepturbestandteile an mehreren Stellen entlang des Verfahrensteils des Extruders in fester oder flüssiger Form ermöglichen. Der mindestens eine Extruder kann auch eine Entgasung von Luft und/oder niedermolekularen Bestandteilen, insbesondere eine atmosphärische und/oder vakuumunterstützte Entgasung, ermöglichen. Der Herstellungsprozess kann in dem mindestens einen Extruder auch Prozessgase, insbesondere in Inertgase, überlagert werden, um eine Oxidation der Elektrodensuspension zu verhindern und/oder ATEX-Anforderungen zu erfüllen.

Der Extruder kann beispielsweise einen Schneckendurchmesser SD im Bereich von 10 mm bis 250 mm, insbesondere von 12 mm bis 133 mm haben. Ein Verhältnis der Schneckenlänge SL zu dem Schneckendurchmesser SD (auch als L/D-Verhältnis bezeichnet) des Extruders kann beispielsweise im Bereich von 25 bis 70, insbesondere im Bereich von 40 bis 52, liegen.

Ein Verfahren nach Anspruch 5 ist besonders effizient und wirtschaftlich. Insbesondere ist eine Umleitung des Suspensionsstroms abhängig von einem Qualitätskriterium, insbesondere von dem Erreichen einer Soll-Qualität, möglich. Beispielsweise kann eine Zwei-Wegeweiche angesteuert werden, um im Bedarfsfall Elektrodensuspension, die die Qualitätsanforderungen nicht erfüllt, ausschleusen zu können. Eine die Qualitätsanforderungen erfüllende Elektrodensuspension kann über die Mehrwegeweiche insbesondere direkt weitergeleitet werden an weitere Verarbeitungsstationen und/oder ein Puffersilo. Es ist auch möglich, eine Drei- oder Mehrwegeweiche anzusteuern. Insbesondere kann der Suspensionsstrom abhängig von einer jeweiligen Qualitätsstufe umgeleitet werden.

Das Verfahren nach Anspruch 6 ist besonders wirtschaftlich und ermöglicht geringen Ausschuss. Die In-line-Messung kann direkt im laufenden Herstellungsprozess erfolgen. Eine umständliche Probenentnahme und/oder -aufbereitung ist vermieden. Dies ermöglicht kurze Reaktionszeiten. Bevorzugt erfolgt die Messung im Bereich einer Mischvorrichtung, beispielsweise in einem Mischer. Die Elektrodensuspension kann bevorzugt während des Mischvorgangs überprüft werden. Bei kontinuierlichen Prozessen kann die mindestens eine optische Messung insbesondere im Bereich eines Extruderaustrags erfolgen. Die optische Messung kann stromaufwärts und/oder stromabwärts des Extruderaustrags erfolgen, insbesondere derart nahe an dem Extruderaustrag, dass die Rezepturbestandteile bereits zu der Elektrodensuspension vermischt sind. Beispielsweise kann die mindestens eine optische Messung stromaufwärts einer anzusteuernden Mehrwegeweiche erfolgen. In diesem Fall kann bei gemessenen Abweichungen von einer Soll-Eigenschaft, insbesondere einer Soll-Qualität, die Mehrwegeweiche angesteuert werden, ohne dass Fließzeiten der Suspension bis zur Weiche berücksichtigt werden müssen. Auf diese Weise kann schnell und effizient auf Abweichungen von Soll-Eigenschaften, beispielsweise auf Qualitätsschwankungen, reagiert werden.

Ein Verfahren nach Anspruch 7 ermöglicht eine besonders präzise und zuverlässige Überprüfung der herzustellenden Elektrodensuspension. Mehrere optische Messungen an unterschiedlichen Positionen sind besonders vorteilhaft für kontinuierliche Herstellungsverfahren. Hierdurch können vorteilhafterweise Soll-Eigenschaften über eine Förderstrecke nachvollzogen werden. Beispielsweise können Entmischungsprozesse in dem Suspensionsstrom beispielsweise in einer Rohrleitung und/oder einem Puffersilo, detektiert werden. Mehrere optische Messungen an unterschiedlichen Positionen in einem kontinuierlichen Herstellungsprozess haben zudem den Vorteil, dass eine zeitliche Nachverfolgung des durch die Produktionsanlage geförderten Suspensionsstroms möglich ist. Beispielsweise können optische Messungen im Bereich eines Extruders, insbesondere im Bereich des Verfahrensteils und/oder des Extruderaustrags, im Bereich einer Rohrleitung und/oder in, vor und/oder nach einem Puffersilo erfolgen. Hierdurch können Entmischungsprozesse nach dem Vermischen, insbesondere in Rohrleitungen und/oder im Puffersilo, nachvollzogen werden. Mehrere Messungen können auch an unterschiedlichen Tiefen in der Elektrodensuspension bzw. dem Suspensionsstrom erfolgen. Beispielsweise können mehrere Messvorrichtungen mit unterschiedlich tief in den Suspensionsstrom eingetauchten Sensoren vorgesehen sein, beispielsweise im Bereich eines Extruderaustrags, eines Puffersilos und/oder von Rohrleitungen.

Es ist auch möglich, an unterschiedlichen Positionen innerhalb einer Mischvorrichtung zu messen. Beispielsweise kann an unterschiedlichen Positionen innerhalb des Extruders gemessen werden, um eine Dispergiergüte entlang des Verfahrensteils und/oder des Extruderaustrags nachzuvollziehen. Die Messung an unterschiedlichen Positionen ist auch vorteilhaft für Batch-Verfahren. Beispielsweise kann an unterschiedlichen Positionen innerhalb einer Mischvorrichtung gemessen werden. Durch Vergleich der Messergebnisse an unterschiedlichen Positionen kann eine die Dispergiergüte an unterschiedlichen Punkten ermittelt und/oder verglichen werden. Beispielsweise kann die Homogenität der Elektrodensuspension überprüft werden. Hierdurch kann insbesondere der Abschluss eines Mischvorgangs im Batch-Verfahren bestimmbar sein.

Ein Verfahren nach Anspruch 8 ist besonders präzise und zuverlässig. Die mehreren nacheinander durchgeführten optischen Messungen können einzeln oder zusammen ausgewertet werden. Beispielsweise können mehrere nacheinander durchgeführte optische Messungen miteinander verglichen werden. Insbesondere können die nacheinander gemessenen Spektren und/oder jeweils ermittelten Kenngrößen, insbesondere mindestens eine Farbkoordinate, miteinander verglichen werden. Hierdurch sind zeitliche Effekte, insbesondere Entmischungsvorgänge und/oder ein Anfahren oder Abschalten der Produktionsanlage, ermittelbar. Es ist auch möglich, die nacheinander durchgeführten optischen Messungen jeweils einzeln auszuwerten. Beispielsweise können die jeweils ermittelten Spektren und/oder die hieraus ermittelten Kenngrößen, insbesondere mindestens eine Farbkoordinate, mit entsprechenden Soll-Kenngrößen, insbesondere Soll-Farbkoordinaten, abgeglichen werden. Hierdurch kann zu unterschiedlichen Zeitpunkten die Einhaltung von Soll-Eigenschaften, insbesondere einer Soll-Qualität, ermittelt werden. Zudem kann ein zeitlicher Verlauf der überprüften Eigenschaften ermittelt und dokumentiert werden.

Die mehrmalige Durchführung der optischen Messung hat insbesondere den Vorteil von kurzen Reaktionszeiten. Bevorzugt wird die optische Messung regelmäßig wiederholt, bevorzugt im Wesentlichen kontinuierlich durchgeführt. Hierdurch kann schnell und effizient auf Abweichungen von Soll-Eigenschaften, insbesondere einer Soll-Qualität, reagiert werden. Dies hat sich als besonders vorteilhaft für kontinuierliche Herstellungsprozesse erwiesen. Durch die im Wesentlichen kontinuierliche Messung kann insbesondere ein Ausschuss verringert werden.

Die wiederholte optische Messung, insbesondere die im Wesentlichen kontinuierliche Durchführung der optischen Messung, kann insbesondere in mindestens einem Zeitabschnitt des Herstellungsverfahrens erfolgen. Beispielsweise kann die wiederholte Messung während eines Anfahrens der Anlage, insbesondere einer Mischvorrichtung, beispielsweise eines Extruders, erfolgen. Hierdurch können Anfahrprozesse überwacht und Anfahrzeiten präzise bestimmt werden. Insbesondere kann bestimmt werden, ab wann die Elektrodensuspension mindestens einer jeweiligen Soll-Eigenschaft entspricht. Bevorzugt erfolgt die wiederholte Messung, insbesondere die im Wesentlichen kontinuierliche Messung über die gesamte Prozessdauer. Zeitliche Variationen in den Eigenschaften, insbesondere der Qualität, der Elektrodensuspension können detektiert und nachvollzogen werden. Hierdurch können insbesondere Dosierausfälle, Dosieränderungen, Chargenschwankungen, insbesondere in Kombination mit Nachfüllgrenzen und/oder Dosiersteuerung, und/oder Abweichungen sonstiger Prozessparameter, beispielsweise eines Durchsatzes, einer Prozesstemperatur und/oder einer Drehzahl, detektiert werden.

Insbesondere im einem Batch-Verfahren kann eine wiederholte Durchführung optischer Messungen, insbesondere eine im Wesentlichen kontinuierliche optische Messung, vorteilhafterweise zur Überprüfung der einzelnen Verfahrensschritte eingesetzt werden. Beispielsweise können sich ändernde Kenngrößen, insbesondere sich ändernde Farbkoordinaten, darauf hinweisen, dass der jeweilige Prozessschritt, beispielsweise ein Mischen von zwei oder mehreren Rezepturbestandteilen, noch nicht abgeschlossen ist. Zeitlich konstante Kenngrößen, insbesondere Farbkoordinaten, können einen Abschluss des jeweiligen Prozessschrittes indizieren.

Ein Verfahren nach Anspruch 9 ist besonders effizient und wirtschaftlich. Durch die Regelung kann ein stabiler Prozess mit besonders geringem Ausschuss bewirkt werden. Erkannten Abweichungen von einer Soll-Eigenschaft, insbesondere einer Soll-Qualität, kann besonders effektiv und effizient entgegengewirkt werden. Die Reaktionszeiten sind gering.

Die Regelung des Bereitstellens der Rezepturbestandteile kann insbesondere die Regelung der Dosierung der Rezepturbestandteile umfassen. Beispielsweise kann eine Zudosierung unterschiedlicher Rezepturbestandteile auf Basis der Auswertung variiert werden. Zusätzlich oder alternativ hierzu können weitere Prozessparameter, insbesondere eine Mischdauer und/oder eine Drehzahl eines Rührwerks, geregelt werden. Im Falle eines kontinuierlichen Prozesses können insbesondere Prozessparameter eines Extruders geregelt werden, beispielsweise Drehzahl, Temperatur, insbesondere Gehäuse- und/oder Suspensionstemperatur, und/oder Durchsatz des Extruders.

Bevorzugt erfolgt die Regelung automatisch, insbesondere vollautomatisch. Beispielsweise können Methoden des maschinellen Lernens, insbesondere neuronale Netzwerke eingesetzt werden, um in Abhängigkeit von der Auswertung der mindestens einen optischen Messung entsprechende Regelungen vorzunehmen. Bevorzugt erfolgt die Regelung in Abhängigkeit von der Auswertung mindestens einer Farbkoordinate, insbesondere eines Farbortes. Die Auswertung mindestens einer Farbkoordinate hat - insbesondere gegenüber der Auswertung eines Spektrums - den Vorteil einer geringen Dimensionalität. Der bei Verwendung eines Farbraums kleinere Parameterraum ermöglicht einen effizienten und zielgerichteten Einsatz automatisierter Regelungsmechanismen, insbesondere auf Basis maschinellen Lernens. Ein Training von KI-Algorithmen auf Basis von Farbkoordinaten eines Farbraumes und/oder weiterer Prozessparameter ist effizient möglich. Beispielsweise können Trainingsdaten generiert werden, indem mindestens eine Kenngrößen, insbesondere mindestens eine Farbkoordinate, gemessen werden, während Rezepturbestandteile, deren Mischungsverhältnis und/oder der Mischvorgang, insbesondere Prozessparameter des Extruders, variiert werden.

Ein Verfahren nach Anspruch 10 ist besonders präzise und effizient. Das Speichern der Auswerteergebnisse ermöglicht eine Nachvollzierbarkeit und Nachverfolgbarkeit der Eigenschaften, insbesondere Qualität, der Elektrodensuspension. Insbesondere können auch im Nachhinein eventuelle Probleme nachvollzogen werden. Bevorzugt werden die Auswerteergebnisse kontinuierlich gespeichert.

Bevorzugt werden auch weitere Prozessparameter gespeichert. Beispielsweise kann die Art und/oder Dosierung der bereitgestellten Rezepturbestandteile gespeichert werden. Zudem können Prozessparameter des Mischvorgangs, insbesondere eines Extruders, gespeichert werden. Auf diese Weise können von Änderungen der Prozessparameter Rückschlüsse auf die geänderten Messergebnisse, insbesondere die mindestens eine Farbkoordinate, gezogen werden. Die Änderung der Messergebnisse kann in Abhängigkeit der Änderungen der Prozessparameter, insbesondere unter Berücksichtigung von Verweil- und/oder Förderzeiten, ausgewertet werden. Hieraus gewonnene Erkenntnisse können zur weiteren Optimierung des Herstellungsprozesses, insbesondere zur weiteren Optimierung einer Regelung des Herstellungsprozesses verwendet werden. Insbesondere kann auf Basis der zuvor gespeicherten Auswertungsergebnisse und/oder Prozessparameter, insbesondere eines Abgleichs hiermit, eine Regelung des Herstellungsprozesses erfolgen. Die gespeicherten Ergebnisse der Auswertung und/oder weiterer Prozessparameter können insbesondere als Trainingsdaten zum Trainieren von Methoden des maschinellen Lernens zur Regelung des Herstellungsprozesses verwendet werden.

Es ist eine weitere Aufgabe der vorliegenden Erfindung eine Anordnung zur Herstellung einer Elektrodensuspension zu verbessern.

Diese Aufgabe ist gelöst durch eine Anordnung mit den in Anspruch 11 angegebenen Merkmalen. Die Anordnung weist eine Mischvorrichtung zum Vermischen mehrerer Rezepturkomponenten zu einer Elektrodensuspension, mindestens eine Messvorrichtung zur Durchführung mindestens einer optischen Messung an der Elektrodensuspension und eine Auswerteeinheit zur Auswertung der mindestens einen optischen Messung auf. Die mindestens eine Messvorrichtung ist dazu ausgelegt, ein kontinuierliches Spektrum der Elektrodensuspension über zumindest einen Teilbereich des ultravioletten, sichtbaren und/oder infraroten, insbesondere nahinfraroten, Frequenzbereichs zu erfassen. Die Anordnung, insbesondere die Auswerteeinheit, ist insbesondere zur Durchführung des oben beschriebenen Verfahrens ausgelegt. Die Anordnung weist die in Bezug auf das Verfahren beschriebenen Vorteile auf. Die Anordnung und deren Bestandteile können einzelne oder mehrere der oben in Bezug auf das Verfahren beschriebenen vorteilhaften Merkmale aufweisen.

Die mindestens eine Messvorrichtung weist insbesondere ein Spektrometer, bevorzugt ein Spektralphotometer, auf. Dies ermöglicht die Ermittlung mindestens einer Farbkoordinate, insbesondere eines Farbortes, aus dem Spektrum. Die Auswerteeinheit ist insbesondere dazu ausgelegt, die Auswertung auf Basis der mindestens eine Farbkoordinate, insbesondere des Farbortes, durchzuführen.

Die mindestens eine Messvorrichtung kann einen Sensor, beispielsweise in Form einer Messsonde, aufweisen. Die Messvorrichtung ist bevorzugt derart angeordnet, dass diese, insbesondere ein Sensor der Messvorrichtung, zumindest teilweise von der Elektrodensuspension umströmt wird. Das Spektrum der Elektrodensuspension wird bevorzugt unmittelbar, insbesondere unverfälscht, erfasst. Dies ermöglicht eine besonders genaue Messung, insbesondere Farbmessung.

Die Anordnung kann mindestens eine Dosiervorrichtung zur Zudosierung mindestens eines Rezepturbestandteils aufweisen. Bevorzugt weist die Anordnung mehrere Dosiervorrichtungen für unterschiedliche Rezepturbestandteile auf. Die Dosiervorrichtung kann insbesondere eine gravimetrische und/oder volumetrische Dosiervorrichtung sein.

Eine Anordnung nach Anspruch 12 ermöglicht eine besonders wirtschaftliche Herstellung der Elektrodensuspension. Die Mischvorrichtung kann insbesondere ein Extruder sein oder einen Extruder umfassen. Extruder eigenen sich besonders zur kontinuierlichen Herstellung der Elektrodensuspension. Insbesondere kann die Elektrodensuspension von dem Extruder direkt an weitere Verarbeitungsstationen zur Weiterbehandlung der Elektrodensuspension gefördert werden, beispielsweise durch entsprechende Rohrleitungen. Es ist auch möglich, zwischen Extruder und nachgeschalteten Verarbeitungsstationen ein oder mehrere Puffersilos anzuordnen. Die Elektrodensuspension kann in den Puffersilos zwischengespeichert und/oder aufbereitet werden.

Der Extruder ist insbesondere ein Mehrwellen-Extruder, vorzugsweise ein gleichlaufender Mehrwellen-Extruder. Der Mehrwellen-Extruder ist insbesondere als Zweiwellen-Extruder bzw. als Doppelschneckenextruder ausgebildet.

Eine Mehrwegeweiche nach Anspruch 13 ermöglicht eine besonders wirtschaftliche Herstellung der Elektrodensuspension. Insbesondere ist der Ausschuss vermindert. Beispielsweise kann mit Hilfe der Mehrwegeweiche nur diejenige Elektrodensuspension ausgeschleust werden, für die eine Abweichung von Soll-Eigenschaften, insbesondere einer Soll-Qualität, festgestellt wurde.

Eine Anordnung nach Anspruch 14 ist besonders wirtschaftlich. Insbesondere kann die Messung in-line erfolgen. Eine Probenentnahme und/oder -aufbereitung ist nicht erforderlich. Mit Hilfe der mindestens einen Messvorrichtung kann insbesondere auch die Dispergiergüte, insbesondere die Homogenität der Elektrodensuspension, während und/oder nach dem Mischvorgang überprüft werden.

Eine Anordnung nach Anspruch 15 ermöglicht eine besonders genaue Überprüfung der Elektrodensuspension. Durch die in unterschiedlichen Positionen angeordnete Messvorrichtung können lokale Effekte, beispielsweise Mischprozesse in einer Rohrleitung oder in einem Puffersilo, detektiert werden. Es können auch mehrere Messvorrichtungen in unterschiedlichen Positionen in der Mischvorrichtung, insbesondere in einer im Batch-Verfahren zu betreibenden Mischvorrichtung angeordnet sein. Hierdurch kann eine Homogenität der Suspensions-Eigenschaften, insbesondere der Dispergiergüte, überprüft werden.

Eine Anordnung nach Anspruch 16 ist besonders effizient und wirtschaftlich. Mit Hilfe der Steuereinheit kann mit kurzer Reaktionszeit auf erkannte Abweichungen von Soll-Eigenschaften der Elektrodensuspension reagiert werden.

Die Steuereinheit hat insbesondere einteilig mit der Auswerteeinheit ausgebildet sein und/oder die Auswerteeinheit umfassen. Die Steuereinheit kann auch mehrteilig, insbesondere verschiedene Steuermodule umfassend, ausgebildet sein. Beispielsweise kann die Steuereinheit eine Extrudersteuerung zur Ansteuerung eines Extruders aufweisen.

Die Anordnung weist bevorzugt eine Regeleinheit zum Regeln des Herstellungsprozesses in Abhängigkeit von der Auswertung der mindestens einen optischen Messung und/oder weiterer Prozessparameter auf. Die Regeleinheit kann beispielsweise auf Basis von Messergebnissen und/oder weiteren Prozessparametern Regelbefehle zum Regeln der Anlage, insbesondere der Mischvorrichtung, geben. Bevorzugt kann die Regeleinheit auch zuvor gespeicherte Messergebnisse und/oder Prozessdaten in den Regelprozess einbeziehen. Die Regeleinheit kann beispielsweise in eine Steuereinheit, insbesondere in eine Extrudersteuerung integriert sein. Es ist auch möglich, dass die Regeleinheit Regelbefehle an eine Steuereinheit zum Ansteuern der Anlage, insbesondere der Mischvorrichtung, übergibt.

Eine Anordnung nach Anspruch 17 ist besonders vorteilhaft. Insbesondere eignet sich eine ein Spektralphotometer aufweisende Messvorrichtung zur Bestimmung einer Farbe der Elektrodensuspension. Hierdurch kann in einfacher Weise eine Auswertung auf Basis mindestens einer Farbkoordinate, insbesondere eines Farbortes erfolgen.

Weitere Merkmale, Vorteile und Einzelheiten der Erfindung ergeben sich aus den nachfolgenden Ausführungsbeispielen und den zugehörigen Figuren. Es zeigen:
- Fig. 1: eine schematische Darstellung einer Anordnung zur Herstellung einer Elektrodensuspension mit einer Messvorrichtung zur Durchführung mindestens einer optischen Messung an der Elektrodensuspension,
- Fig. 2: ein zeitlicher Verlauf von mittels der mindesten einen optischen Messung ermittelten exemplarischen Farbkoordinaten für unterschiedliche Rezepturen der Elektrodensuspension, die mittels der mindestens einer optischen Messung bestimmt wurden,
- Fig. 3: ein zeitlicher Verlauf einer mittels der mindestens einen optischen Messung ermittelten exemplarischen Farbkoordinate der Elektrodensuspension mit Hilfe der Messvorrichtung ermittelten Farbkoordinate während eines Prozessstarts und eines Prozessendes,
- Fig. 4: ein zeitlicher Verlauf von mittels der mindesten einen optischen Messung ermittelten exemplarischen Farbkoordinaten während des Herstellungsprozesses,
- Fig. 5: eine Auftragung einer mittels der mindestens einen optischen Messung ermittelten exemplarischen Farbkoordinate für unterschiedliche Drehzahlen des Extruders,
- Fig. 6: eine Auftragung einer mittels der mindestens einen optischen Messung ermittelten exemplarischen Farbkoordinate für unterschiedliche Partikelgrößen,
- Fig. 7: eine schematische Darstellung eines weiteren Ausführungsbeispiels einer Anordnung zur Herstellung einer Elektrodensuspension,
- Fig. 8: eine schematische Darstellung eines weiteren Ausführungsbeispiels einer Anordnung zur Herstellung einer Elektrodensuspension,
- Fig. 9: eine schematische Darstellung eines weiteren Ausführungsbeispiels einer Anordnung zur Herstellung einer Elektrodensuspension,
- Fig. 10: eine schematische Darstellung eines weiteren Ausführungsbeispiels einer Anordnung zur Herstellung einer Elektrodensuspension im Batch-Verfahren während der Zugabe der Rezepturbestandteile,
- Fig. 11: die Anordnung gemäß Fig. 9 während des Vermischens der Rezepturbestandteile, und
- Fig. 12: die Anordnung gemäß Fig. 9 nach einem ausreichenden Vermischen der Rezepturbestandteile zu der Elektrodensuspension.

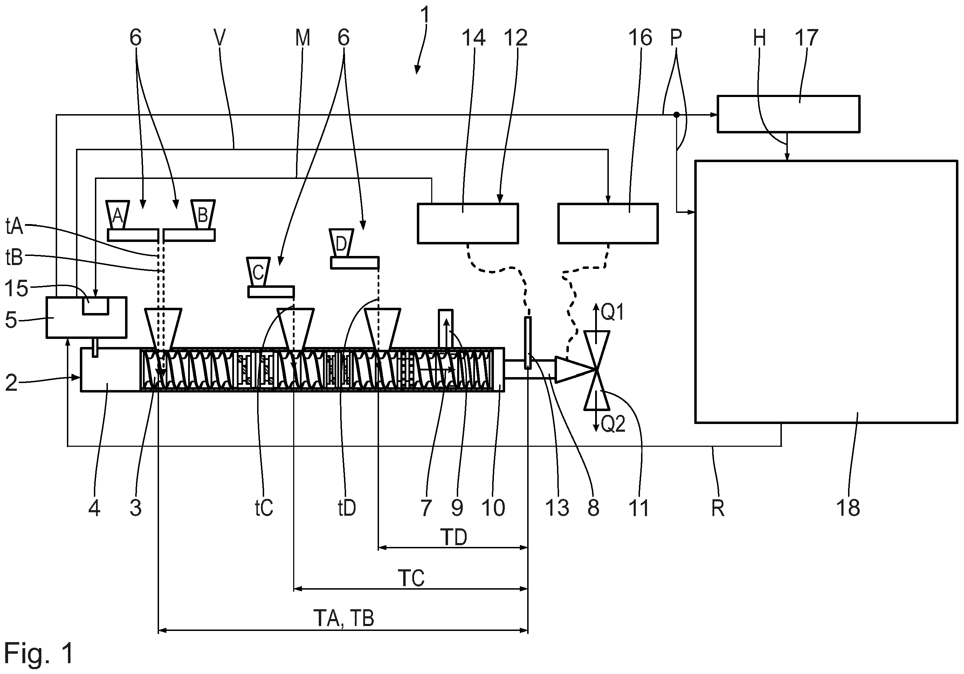

In Fig. 1 ist ein erstes Ausführungsbeispiel einer Anordnung 1 zur Herstellung einer Elektrodensuspension gezeigt. Die Anordnung 1 weist eine Mischvorrichtung in Form eines Extruders 2 auf. Der Extruder 2 ist als Mehrwellen-Extruder bzw. Zweiwellen-Extruder ausgebildet. Der Extruder 2 weist zwei Extruderschnecken 3 auf, die gleichlaufend sind, also in gleichen Drehrichtungen drehangetrieben sind. Der Extruder 2 ist beispielsweise ein gleichlaufenden, dichtkämmenden Doppelschneckenextruder. Die Ausgestaltung der in Fig. 1 gezeigten Extruderschnecken 3 ist rein exemplarisch. Für die Herstellung von geeigneten Elektrodensuspensionen kann der Fachmann geeignete Extruder- und -schneckenkonfigurationen wählen. Die Extruderschnecken 3 werden über einen Extruderantrieb 4 angetrieben. Der Extruderantrieb 4 weist insbesondere einen Motor, eine Kupplung und ein Getriebe auf. Der Extruderantrieb 4 ist über eine Extrudersteuerung 5 ansteuerbar. Die Extrudersteuerung 5 steuert und/oder regelt die Prozessparameter des Extruders, insbesondere die Drehzahl, den Durchsatz und/oder die Temperatur, insbesondere die Gehäusetemperatur.

Die Anordnung 1 weist Dosiervorrichtungen 6 zum Zudosieren von Rezepturbestandteilen A, B, C, D auf. Die Dosiervorrichtungen 6 sind entlang der Extruderschnecke 3 angeordnet. Unterschiedliche Rezepturbestandteile A, B, C, D werden an unterschiedlichen Stellen in den Extruder 2 eingebracht. Die Rezepturbestandteile A, B, C, D können einzelnen Bestandteilen der Elektrodensuspension, beispielsweise dem Lösungsmittel, dem Aktivstoff, dem leitfähigen Additiv und/oder dem Bindemittel, entsprechen. Zumindest einzelne der in Fig. 1 gezeigten Rezepturbestandteile A, B, C, D können auch bereits Mischungen einzelner oder mehrere dieser Bestandteile sein. Die Dosiervorrichtungen 6 können beispielsweise gravimetrische und oder volumetrisch Dosiervorrichtungen aufweisen. Für die verschiedenen Rezepturbestandteile A, B, C, D können auch unterschiedliche Dosiervorrichtungen 6 vorgesehen sein, insbesondere abhängig von dem Aggregatzustand (fest, flüssig, gasförmig) des jeweiligen Rezepturbestandteils A, B, C, D. Die Extrudersteuerung 5 ist bevorzugt auch zur Ansteuerung der Dosiervorrichtungen 6 ausgelegt.

Die Rezepturbestandteile A, B, C, D werden mit Hilfe der Dosiervorrichtungen 6 bereitgestellt und mit Hilfe des Extruders 2 zu der Elektrodensuspension vermischt. Die Rezepturbestandteile A, B, C, D und die hieraus resultiere Elektrodensuspension wird durch Drehung der Extruderschnecken 3 in Förderrichtung 7 gefördert. In Förderrichtung 7 endseitig sind eine Endplatte 10 und ein Extruderaustrag 8 angeordnet. Die Elektrodensuspension wird durch den Extruderaustrag 8 gefördert.

Der Extruder 2 weist eine Entgasungseinrichtung 9 auf. Die Entgasungseinrichtung 9 ist beispielsweise zur atmosphärischen Entgasung oder zur Vakuumentgasung ausgebildet. Mittels der Entgasungseinrichtung 9 können Luft und/oder niedermolekulare Bestandteile der Elektrodensuspension entgast werden.

Am Extruderaustrag 8 ist ein Mehrwegeventil 11 angeordnet, über welches ein Suspensionsstrom der Elektrodensuspension umgeleitet werden kann. Bei dem in Fig. 1 gezeigten Ausführungsbeispiel ist das Mehrwegeventil 11 ein Dreiwegeventil. Die Elektrodensuspension kann abhängig von einer Qualität der Elektrodensuspension an unterschiedliche Ausgänge des Mehrwegeventils 11 geleitet werden. Dies ist durch die Pfeile Q1 bzw. Q2 in Fig. 1 schematisch dargestellt. Bei Unterschreiten einer Soll-Qualität kann die Elektrodensuspension beispielsweise ausgeschleust werden, insbesondere in einen Auffangbehälter geschleust werden. Bei Erreichen der Soll-Qualität kann die Elektrodensuspension weitergeleitet werden, beispielsweise in ein Puffersilo und/oder direkt an weitere Verarbeitungsstationen zur Weiterbehandlung der Elektrodensuspension.

Zur Überprüfung der Qualität der Elektrodensuspension weist die Anordnung 1 eine Messvorrichtung 12 auf. Die Messvorrichtung 12 weist einen Sensor 13 auf. Der Sensor 13 ist als Messsonde ausgestaltet und im Bereich des Extruderaustrags 8 angeordnet. Der Sensor 13 ist derart im Bereich des Extruderaustrags 8 angeordnet, dass dieser zumindest endseitig von der Elektrodensuspension umströmt wird. Der Sensor 13 dient zum Einstrahlen von Licht auf die Elektrodensuspension und zum Empfangen der von der Elektrodensuspension ausgehenden Remissionsstrahlung.

Der Sensor 13 ist in Signalverbindung mit einer Messeinrichtung 14 der Messvorrichtung. Die Messeinrichtung 14 weist ein Spektralphotometer auf. Mit Hilfe des Spektralphotometers wird aus der detektierten Remissionsstrahlung ein Spektrum der Elektrodensuspension erfasst. Das erfasste Spektrum deckt zumindest einen Teilbereich des ultravioletten, sichtbaren und infraroten, insbesondere nahinfraroten, Lichts ab, insbesondere den kompletten Frequenzbereich des sichtbaren Lichts. Das Spektralphotometer bestimmt aus dem erfassten Spektrum eine Farbe der Elektrodensuspension, Hierzu bestimmt das Spektralphotometer den entsprechenden Farbort und die zugehörigen Farbkoordinaten in einem geeigneten Farbraum. Die Wahl des Farbraums ist nicht erheblich. Als besonders geeignet hat sich der CIELAB-Farbraum erwiesen. Dieser weist die Farbkoordinaten L^{∗}, a^{∗}, b^{∗} auf. Die Farbkoordinaten stellen Messdaten M dar. In anderen Ausführungsbeispielen können die Messdaten zusätzlich oder alternativ auch das erfasste Spektrum und/oder andere hieraus gewonnene Kenngrößen umfassen. Aus den Messdaten M, insbesondere aus den Farbkoordinaten, können Rückschlüsse auf einzelne Prozessparameter und/oder Rezepturbestandteile und/oder deren Mischungsverhältnis und/oder die Dispergiergüte gezogen werden.

Die Messvorrichtung 12 ist zur kontinuierlichen Überprüfung der Elektrodensuspension ausgelegt. Dies ermöglicht eine frühzeitige Erkennung von möglichen Abweichungen der Elektrodensuspension von Soll-Eigenschaften, insbesondere von einer Soll-Qualität.

Die mittels der Messvorrichtung 12 ermittelten Messdaten M werden an eine Auswerteeinheit 15 übermittelt. In dem gezeigten Ausführungsbeispiel ist die Auswerteeinheit 15 in die Extrudersteuerung 5 integriert. In anderen Ausführungsbeispielen dient beispielsweise die Messvorrichtung selbst als Auswerteeinheit. Eine separate Auswerteeinheit ist dann nicht erforderlich. Es ist auch möglich, verschiedene Schritte der Auswertung auf unterschiedlichen Geräten durchzuführen.

Aufgrund der unterschiedlichen Positionierung der Dosiereinrichtungen 6 entlang des Extruders 2 weisen die jeweils zudosierten Rezepturbestandteile A, B, C, D unterschiedliche Verweilzeiten im Prozess auf, bis diese den Sensor 13 der Messvorrichtung 12 passieren. Dies sind zum einen die Dosierzeiten ti, wobei i = A, B, C, D, zur Einbringung der jeweiligen Rezepturbestandteile A, B, C, D in den Extruder. Hinzu kommt die jeweilige Förderzeit Ti, wobei i = A, B, C, D, im Extruder. Die Dosierzeiten ti und die Förderzeiten Ti sind in Fig. 1 schematisch dargestellt. Die gesamte Verweilzeit der Rezepturbestandteile A, B, C, D ergibt sich zu ti + Ti. Eine Änderung der Dosierung und/oder ein Ausfall der Dosierung einer der Rezepturbestandteile A, B, C, D, kann nach der jeweiligen Verweilzeit ti + Ti mit Hilfe der Messvorrichtung 12 detektiert werden.

Mit Hilfe der Messvorrichtung 12 erfolgt eine Überprüfung der Elektrodensuspension im Bereich des Extruderaustrags. In anderen Ausführungsbeispielen kann eine Überprüfung auch an anderen Positionen, beispielsweise im Bereich der Endplatte, erfolgen. Auch ist es möglich, mehrere Messvorrichtungen 12 und/oder mehrere Sensoren 13 an unterschiedlichen Positionen zu verwenden.

Mit Hilfe der Auswertung der Messdaten M kann die Qualität der Elektrodensuspension festgestellt werden. Insbesondere ist eine Qualität der Elektrodensuspension quantifizierbar. Beispielsweise kann die Elektrodensuspension abhängig von der Auswertung der Messdaten in unterschiedliche Qualitätsklassen eingeteilt werden, insbesondere ob eine Soll-Qualität erfüllt ist (In-Spec-Produkte) oder nicht (Off-Spec-Produkte).

Von der Extrudersteuerung 5 werden Steuerdaten V an eine Ventilsteuerung 16 des Mehrwegeventils 11 übermittelt. In anderen Ausführungsbeispielen kann die Ventilsteuerung auch in die Extrudersteuerung integriert sein. Beispielsweise kann die Extrudersteuerung 5 das Mehrwegeventil 11 direkt ansteuern. Abhängig von der Auswertung, insbesondere von einer ermittelten Qualitätsstufe, erfolgt eine Ansteuerung des Mehrwegeventils 11 zur automatischen Umlenkung des Suspensionsstroms. Hierdurch kann bei Unterschreiten einer Soll-Qualität die Elektrodensuspension ausgeschleust werden, um einen unnötigen Ausschuss zu vermeiden.

Die Messdaten M, ein Ergebnis der Auswertung und/oder sonstige Prozessparameter werden als Prozessdaten P an einen Datenspeicher 17 übermittelt und dort gespeichert. Hierdurch sind die Prozessdaten P, insbesondere eventuelle Qualitätsänderungen, nachvollziehbar und nachverfolgbar.

Qualitätsprobleme können anhand der gespeicherten Prozessdaten P nachvollzogen werden. Die Speicherung kann, wie die Durchführung der optischen Messung, im Wesentlichen kontinuierlich erfolgen. Es ist möglich, die Speicherung in frei einstellbaren, festen Zeitabständen und/oder bei Änderungen vorzunehmen, um eine ausreichende Rückverfolgung zu gewährleisten, beispielsweise einmal pro Sekunde, einmal pro Minute, einmal pro Stunde oder einmal pro Tag. Die Speicherintervalle können für unterschiedliche Datensätze voreingestellt werden. Die Speicherung kann zusätzlich oder alternativ manuell ausgelöst werden, beispielsweise, wenn Produktionsprobleme erkannt werden. Mögliche Speicherintervalle können beispielsweise zwischen 1 sec. und einem Tag, insbesondere 1 sec., 30 sec., 1 min, 5 min., 1 Std. und/oder 1 Tag, betragen.

Der Datenspeicher 17 kann beispielsweise Teil eines Servers sein. Es auch möglich, eine Cloud als Datenspeicher 17 zu verwenden. Der Datenspeicher kann insbesondere Teil eines ERP-Systems (ERP: Enterprise Resource Planning), MES-Systems (MES: Manufacturing Execution System) und/oder SCADA-Systems (SCADA: Supervisory Control and Data Acquisision) sein.

Die Prozessdaten P werden zudem einer Regeleinheit 18 zugeführt. Zusätzlich oder alternativ kann die Regeleinheit 18 auch im Datenspeicher 17 hinterlegte historische Prozessdaten H empfangen. Die Regeleinheit 18 bestimmt Regelparameter R auf Basis der Prozessdaten P und/oder der historischen Prozessdaten H. Abhängig von den Prozessdaten P und/oder den historischen Prozessdaten H werden dann Regelbefehle R an die Extrudersteuerung 5 zum entsprechenden Ansteuern des Extruders 2 und/oder der Dosiervorrichtungen 6 übergeben. Die Regeleinheit 18 ermöglicht eine Regelung der Bereitstellung der Rezepturbestandteile A, B, C, D und/oder des Mischvorgangs im Extruder auf Basis der ermittelten Prozessparameter P, insbesondere des darin enthaltenen Ergebnisses der Auswertung der Messdaten M und/oder der Messdaten M selbst.

Die Regeleinheit 18 ist in dem in Fig. 1 schematisch gezeigten Ausführungsbeispiel außerhalb der Extrudersteuerung 15 dargestellt. Beispielsweise kann die Regeleinheit 18 Teil eines Servers und/oder Cloud-Systems sein. In anderen, nicht dargestellten Ausführungsbeispielen, kann die Regeleinheit Teil der Extrudersteuerung und/oder der Auswerteeinheit sein.

Die Regeleinheit 18 kann insbesondere Regelalgorithmen, bevorzugt auf Basis des maschinellen Lernens, insbesondere neuronale Netzwerke, ausführen, um auf Basis der Prozessparameter P und/oder der historischen Prozessparameter H die Regelbefehle R zu bestimmen. In einem derartigen Fall können die historischen Prozessparameter H zum Trainieren der Algorithmen des maschinellen Lernens verwendet werden. Hierdurch kann die mit Hilfe der Regeleinheit 18 erfolgte Regelung weiter optimiert werden.

In anderen, nicht figürlich dargestellten Ausführungsbeispielen, erfolgt keine Regelung des Herstellungsprozesses auf Basis der Prozessdaten P, insbesondere der Messdaten M. Werden Abweichungen, beispielsweise von einer Soll-Qualität, erfasst, kann dies einem Bediener der Anlage angezeigt werden, beispielsweise an einem Bedienpanel der Messvorrichtung 12, an einem Bedienpanel der Extrudersteuerung 5 und/oder an einem Bedienpanel in einer Leitstelle. Abhängig von der detektierten Abweichung können dann entsprechende Gegenmaßnahmen getroffen werden.

Im Folgenden wird die optische Messung und deren Auswertung näher beschrieben. Zur Auswertung der Messdaten M können diese beispielsweise mit zuvor ermittelten Messdaten M verglichen werden. Auf diese Weise können einfach zeitliche Schwankungen der mittels der Messung bestimmbaren Suspensionseigenschaften ermittelt werden. Schwankungen können beispielsweise durch instabile Prozesse bedingt sein, wie sie beispielsweise beim Anfahren des Extruders 2 der Anordnung 1 auftreten können. Zusätzlich oder alternativ hierzu können die Messdaten M mit vorgegebenen entsprechenden Soll-Kenngrößen, insbesondere Soll-Farborten und/oder Soll-Farbkoordinaten, verglichen werden. Insbesondere kann eine Abweichung, insbesondere Farbabweichung, von entsprechenden Soll-Kenngrößen, insbesondere Soll-Farbkoordinaten, bestimmt werden. Anhand der ermittelten Abweichung ist die zu bestimmende Eigenschaft der Elektrodensuspension quantifizierbar. Insbesondere ist eine Qualität der Elektrodensuspension quantifizierbar. Beispielsweise kann die Elektrodensuspension abhängig von der Auswertung der Messdaten in unterschiedliche Qualitätsklassen eingeteilt werden, insbesondere ob eine Soll-Qualität erfüllt ist (In-Spec-Produkte) oder nicht (Off-Spec-Produkte).

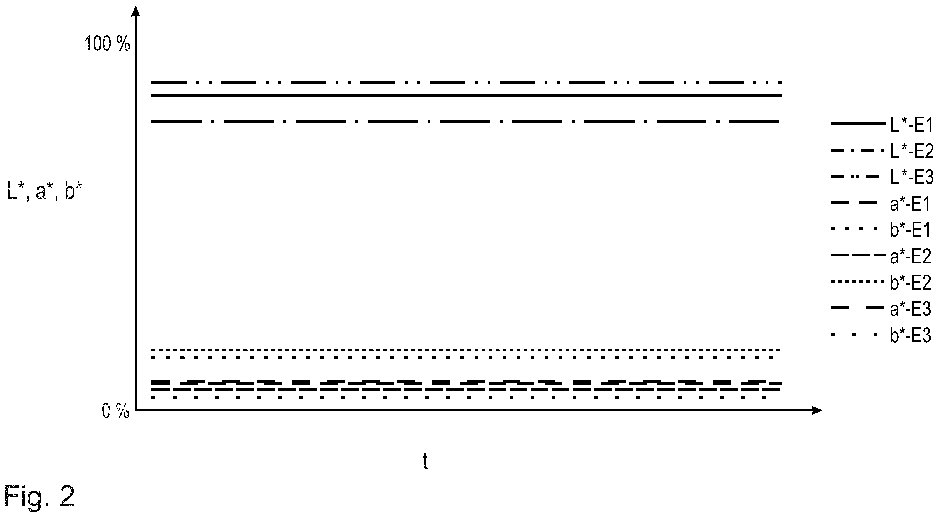

Mit Bezug auf die Figuren 2 bis 5 wird die Auswertung anhand ermittelter Farbkoordinaten beispielshaft beschrieben. Die Erfinder haben erkannt, dass anhand eines Farbortes, insbesondere der Farbkoordinaten, zuverlässige Rückschlüsse auf die jeweiligen Rezepturbestandteile, deren Mischungsverhältnis, die Dispergiergüte, weitere Prozessparameter und/oder deren Änderungen gezogen werden können. Insbesondere hat sich gezeigt, dass unterschiedliche Rezepturen sich durch unterschiedliche Farborte, insbesondere unterschiedliche Farbkoordinaten, auszeichnen. Anhand der Farbkoordinaten können daher unterschiedliche Rezepturen, insbesondere unterschiedliche Anteile jeweiliger Rezeptbestandteile erkannt, insbesondere bestimmt, werden.

Der Einfluss der Rezeptur auf die Farbkoordinaten ist exemplarisch in Fig. 2 gezeigt. In Fig. 2 sind die Farbkoordinaten L^{∗}, a^{∗}, b^{∗} für unterschiedliche Rezepturen E1, E2, E3 der Elektrodensuspension über die Zeit t aufgetragen. Zur besseren Übersichtlichkeit sind die Farbkoordinaten L^{∗}, a^{∗}, b^{∗} an der y-Achse jeweils normiert aufgetragen. Aus Fig. 2 ist ersichtlich, dass sich die Farbkoordinaten unterschiedlicher der Rezepturen E1, E2, E3 unterscheiden. Mittels der mindestens einen optischen Messung sind die unterschiedlichen Rezepturen E1, E2, E3 voneinander unterscheidbar.

Bei dem in Fig. 2 gezeigten Beispiel ändern sich die Farbkoordinaten L^{∗}, a^{∗}, b^{∗} für die einzelnen Rezepturen E1, E2, E3 nicht über die Zeit t. Dies zeigt einen stabilen Herstellungsprozess ohne Prozessschwankungen.

Änderungen der Messdaten M, insbesondere der Farbkoordinaten, deuten auf Rezepturänderungen, Prozessänderungen und/oder instabile Prozesse hin. Beispielsweise kann anhand der Änderungen der Farbkoordinaten, insbesondere deren Änderungen, zwischen verschiedenen Prozessschritten bzw. Prozessintervallen unterschieden werden. Beispielsweise kann zwischen einem Prozessstart, einem stabilen Prozess und einem Prozessende unterschieden werden. Der stabile Prozess ist beispielhaft in Fig. 2 gezeigt.

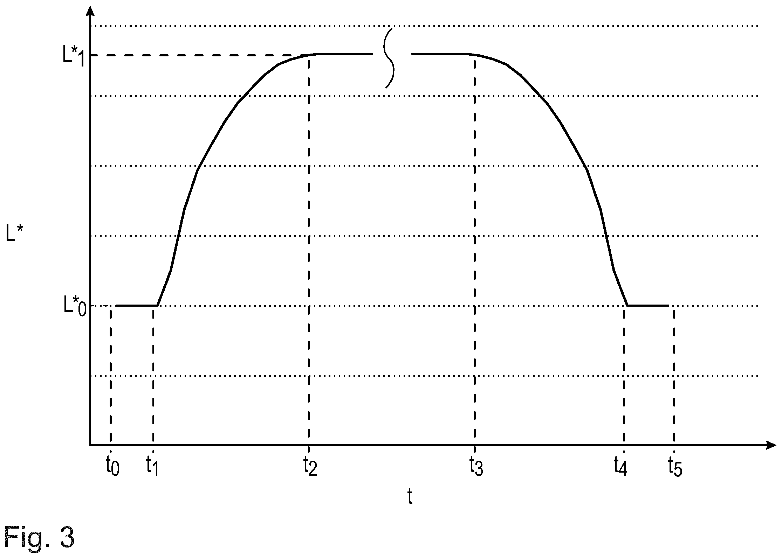

In Fig. 3 ist die Farbkoordinate L^{∗} über die Zeit t für den Prozessstart, das sogenannte Anfahren, und das Prozessende dargestellt. Zum Zeitpunkt t₀ wird die Anordnung 1, insbesondere der Extruder 2, eingeschaltet. Bei t₁ werden die Dosierungen eingeschaltet und damit die Rezepturbestandteile A, B, C, D zudosiert. Mit etwas Verzögerung stellt sich eine Änderung der Farbkoordinate L^{∗} über die Zeit t ein. Die Farbkoordinate L^{∗} ändert sich von einem Startwert L^{∗}₀ hin zu einer Sollwert L^{∗}₁, der der gewünschten Rezeptur entspricht. Zum Zeitpunkt t₂ wird der Sollwert L^{∗}₁ erreicht. Das anschließende Plateau zeigt an, dass der Prozess stabil läuft und damit der Prozessstart abgeschlossen ist.

Bei t₃ werden die Dosiervorrichtungen 6 abgeschaltet. Dies leitet das Prozessende ein. Die Farbkoordinate L^{∗} ändert sich von dem Sollwert L^{∗}₁, bis der Extruder 2 leer läuft bei t₄. Zur Zeit t₅ wird die Maschine abgeschaltet.

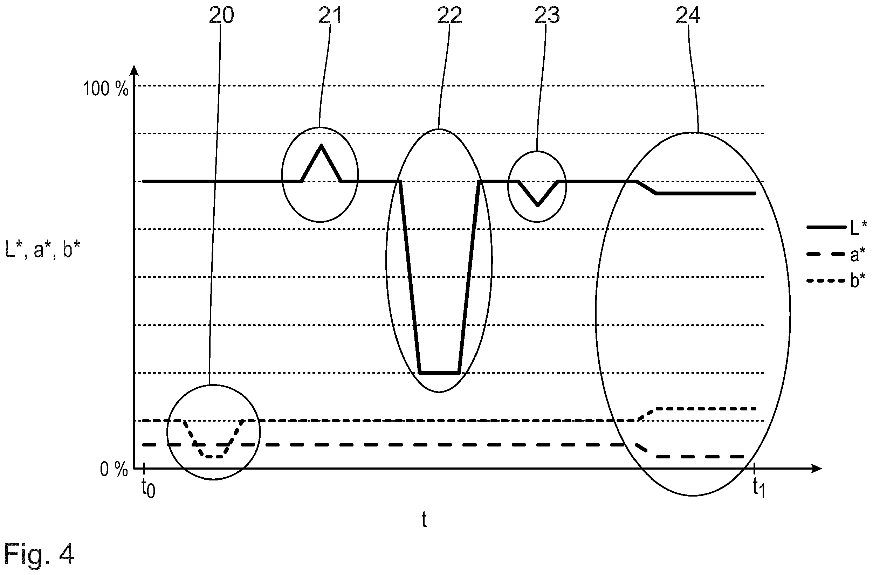

In Fig. 4 sind die Farbkoordinaten L^{∗}, a^{∗}, b^{∗} jeweils normiert über die Zeit t aufgetragen. In Fig. 4 sind verschiedene mögliche Prozessänderungen bzw. Prozessschwankungen im Herstellungsprozess und deren Auswirkungen auf die Farbkoordinaten gezeigt. Aus Fig. 4 ist ersichtlich, wie aus Änderungen der Messdaten Rückschlüsse auf einzelne Prozessänderungen und/oder entsprechende Produktionsfehler gezogen werden können.

Bei Zeit t₀ in Fig. 4 ist ein stabiler Prozess im Gange, bei dem die Sollwerte für die Farbkoordinaten L^{∗}, a^{∗}, b^{∗} eingehalten werden.

Bei 20 erfolgt eine temporäre Verringerung der Farbkoordinaten b^{∗}. Die hierdurch angezeigte Blau-Verschiebung tritt aufgrund eines verringerten Binderanteil auf. Der starke Abfall der Farbkoordinate b^{∗} lässt sich durch einen temporären Ausfall der entsprechenden Dosiervorrichtung 6 erklären. Nach Behebung des Ausfalls und/oder Erhöhung des Binderanteils erhöht sich die Farbkoordinate b^{∗} wieder auf die Soll-Farbkoordinate.

Bei 21 ist eine temporäre Erhöhung der Farbkoordinate L^{∗} gezeigt. Die Erhöhung der Farbkoordinate L^{∗} ist es auf eine Änderung des Durchsatzes zurückzuführen. Beispielsweise ist die temporäre Erhöhung der Farbkoordinate L^{∗} auf eine Erhöhung aller Dosierungen, insbesondere unabhängig von deren Zugabepunkten, zurückzuführen. Hierdurch kommt es temporär zu Rezepturabweichungen.

Bei 22 ist ein temporärer Einbruch der Farbkoordinate L^{∗} gezeigt. Die Verringerung von der Farbkoordinate L^{∗} ist auf eine Erhöhung der Konzentration der leitfähigen Partikel, insbesondere Ruß und/oder Graphitplättchen, zurückzuführen, beispielsweise auf eine Überdosierung dieses Rezepturbestandteils.

Bei 23 ist eine geringfügige Verringerung der Farbkoordinate L^{∗} gezeigt. Diese ist auf eine temporäre Änderung der Drehzahl, insbesondere einer Erhöhung der Drehzahl, zurückzuführen.

Bei 24 ist eine geringfügige Änderung aller Farbkoordinaten zu sehen. Dies zeigt einen Rezepturwechsel an, beispielsweise, weil andere Rezepturbestandteile verwendet werden und/oder deren Mischungsverhältnis geändert wird. Nach einer kurzen Übergangsphase stellt sich ein konstanter Wert für die jeweiligen Farbkoordinaten ein, was einen erfolgreichen Rezepturwechsel anzeigt.

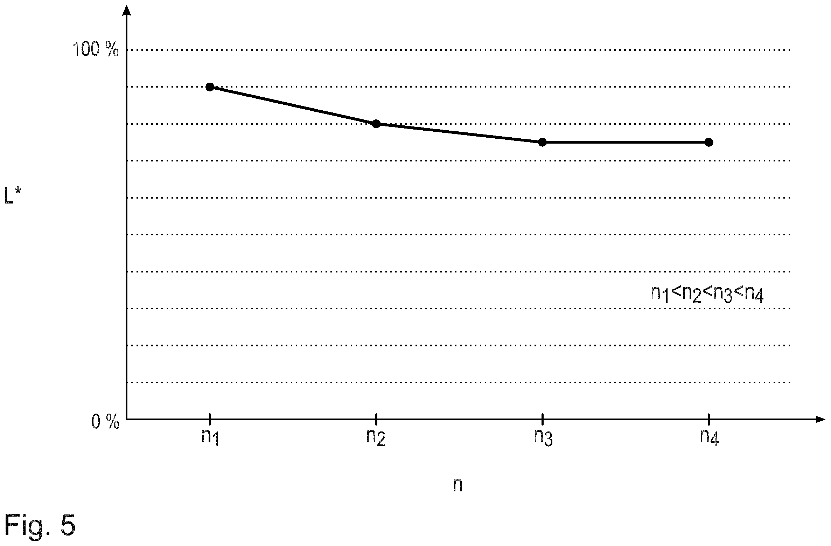

In Fig. 5 ist die Farbkoordinate L^{∗} normiert aufgetragen in Abhängigkeit der Extruderdrehzahl n. Mit höherer Extruderdrehzahl n nimmt der Wert der Farbkoordinate L^{∗} ab. Mit Hilfe dieser Kenntnis ist es möglich, Änderungen der Farbkoordinate L^{∗}, wie sie beispielsweise bei 23 in Fig. 4 gezeigt sind, präzise auf konkrete Änderungen der Prozessparameter, hier die Extruderdrehzahl n, zurückführen.

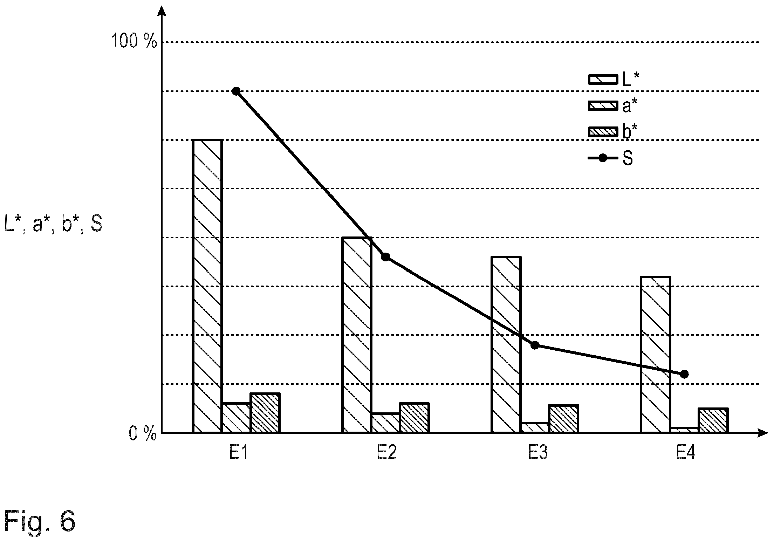

In Fig. 6 ist der Einfluss der mittleren Partikelgröße S der leitfähigen Partikel auf die Farbkoordinaten L^{∗}, a^{∗}, b^{∗} gezeigt, wobei die mittlere Partikelgröße S und die Farbkoordinaten L^{∗}, a^{∗}, b^{∗} jeweils normiert an der y-Achse aufgetragen sind. Die Farbkoordinaten L^{∗}, a^{∗}, b^{∗} sind für verschiedene Rezepturen E1 bis E4 gezeigt, wobei sich die Rezepturen E1 bis E4 nur hinsichtlich der mittleren Partikelgröße S der Füllstoffe unterscheiden. Mit dem Begriff Füllstoff werden die als Feststoff zugeführten Rezepturbestandteile bezeichnet. Mit abnehmender mittlerer Partikelgröße S ändern sich die Farbkoordinaten, insbesondere die Farbkoordinate L^{∗}. Dies zeigt, dass die mindestens eine Farbkoordinate L^{∗}, a^{∗}, b^{∗} mit der mittleren Partikelgröße S korreliert. Somit ist auch eine Änderung der mittleren Partikelgröße S anhand der Auswertung der mindestens einen Farbkoordinate L^{∗}, a^{∗}, b^{∗} ermittelbar.

Aus der obigen Beschreibung ist ersichtlich, dass die Auswertung der Messdaten, insbesondere der mindestens einen Farbkoordinate, eine zuverlässige Überprüfung der Eigenschaften der Elektrodensuspension ermöglicht. Insbesondere sind Rückschlüsse auf einzelne Rezepturbestandteile, deren Mischungsverhältnis und/oder Prozessparameter möglich. Besonders bevorzugt kann die Auswertung anhand der Messdaten, insbesondere der Farbkoordinaten, in Verbindung mit der Überwachung weiterer Prozessparameter, erfolgen. Auf diese Weise kann eindeutig zwischen verschiedenen Ursachen für Änderungen der Eigenschaften der Elektrodensuspension unterschieden werden.

Die oben dargestellten Beispiele für die Auswertung wurden beispielhaft anhand der Farbkoordinaten des CIELAB-Farbraums erläutert. Auch für andere Farbräume lassen sich entsprechende Zusammenhänge ermitteln.

Hierzu kann beispielsweise eine Messung der Elektrodensuspension erfolgen, während Prozessparameter variiert werden. Aus den gewonnenen Daten können dann entsprechende Zusammenhänge ermittelt und zur Auswertung zukünftiger Messungen verwendet werden.

Auf Basis der Auswertung der Messdaten kann die Rezeptur der Elektrodensuspension überprüft und überwacht werden. Insbesondere können Abweichungen der Rezeptur von einer Soll-Qualität erkannt werden. Hierdurch kann auf einfache Weise zwischen verschiedenen Qualitätsstufen der Elektrodensuspension unterschieden werden. Insbesondere ist es möglich, eine Elektrodensuspension, die eine gewisse Soll-Qualität nicht aufweist, auszuschleusen.

Mit Hilfe der optischen Messung und deren Auswertung können Änderungen an der Elektrodensuspension Prozessschwankungen zugeordnet werden. Auf Basis dieser Erkenntnisse können geeignete Gegenmaßnahmen, beispielsweise Änderungen der Prozessparameter und/oder Dosierungen, ermittelt und eingeleitet werden. Dies kann manuell durch einen Bediener erfolgen. Zusätzlich oder alternativ kann eine automatische Regelung erfolgen, wie dies beispielsweise in Fig. 1 anhand der Regeleinheit 18 beschrieben ist.

Im Folgenden wird ein mögliches Vorgehen bei einer, insbesondere automatischen, Regelung beschrieben. Wird eine Abweichung der Elektrodensuspension von einer Soll-Eigenschaft detektiert, können insbesondere eine oder mehrere der folgenden Maßnahmen ergriffen werden:
- Es erfolgt eine Überprüfung, ob Steuereinheiten der Anordnung, insbesondere die Extruder- und/oder Peripheriegerätesteuerungen, eine Störung anzeigen. Im Falle einer Störung sollte keine Regelung der Prozessparameter erfolgen, bis die Störung behoben ist. Beispielsweise kann einem Maschinenbediener die gestörte Komponente angezeigt werden, so dass dieser versuchen, die Störung zu beheben. Die Überprüfung erfolgt bevorzugt bevor weitere Regelschritte unternommen werden.
- Wird eine Abweichung detektiert, die einer einzelnen Dosierung, insbesondere einer einzelnen Dosiervorrichtung 6, zugeordnet werden kann, kann diese nachgeregelt werden. Die Nachregelung kann insbesondere in zuvor definierten Grenzen erfolgen.
- Wird eine Abweichung in einem Rezepturbestandteil erkannt, der über mehrere Dosierungen in dem Prozess hinzugegeben wird, so kann auch das Aufteilungsverhältnis der Zugabemengen zwischen den einzelnen Dosierungen, insbesondere den einzelnen Dosiervorrichtungen, variiert werden. Hierdurch kann ein Nachregeln der jeweiligen Dosierung erfolgen, ohne dass die Gesamtzugabemenge variiert wird.
- Wird eine Abweichung detektiert, die keiner Dosierung zugeordnet werden kann, so kann die Drehzahl nachgeregelt werden. Beispielsweise kann durch eine Erhöhung der Drehzahl mehr mechanische Energie in den Prozess eingebracht werden, worüber die Homogenität der Suspension einstellbar ist. Durch eine höhere Extruderdrehzahl kann insbesondere die Qualität und/oder Homogenität der Suspension verbessert werden. Allerdings hat eine steigende Extruderdrehzahl auch den Nachteil eines erhöhten Energieeintrags in die Elektrodensuspension, weshalb bei der Regelung ein Ausgleich zwischen Energieeintrag und Suspensionsqualität, insbesondere Homogenität, angestrebt wird.
- Kann die Abweichung keiner Dosierung zugeordnet werden, kann zusätzlich oder alterativ auch der Gesamtdurchsatz variiert werden. Durch die Änderung des Gesamtdurchsatzes ändert sich die mechanische Energieeinleitung in die Suspension. Hierdurch ist die Qualität, insbesondere die Homogenität, der Suspension beeinflussbar.
- Kann die detektierte Abweichung keiner Dosierung zugeordnet werden, kann das Verhältnis zwischen Lösemittel und Füllstoffanteil variiert werden, insbesondere in vordefinierten Grenzen, variiert werden.
- Kann die detektierte Abweichung keiner Dosierung zugeordnet werden, so kann auch die Prozesstemperatur, beispielsweise eine Gehäusetemperatur und/oder Suspensionstemperatur, variiert werden. Durch die Temperaturanpassung kann insbesondere stark schwankenden Produktionsbedingungen entgegengewirkt werden, wie sie beispielsweise bei Ausfall des Lüftungs- und/oder Heizungssystems und/oder der Lagerung von Rohstoffen unter nicht definierten klimatischen Bedingungen auftreten können. Eine Änderung der Prozesstemperatur ändert den thermischen Energieeintrag und/oder aufgrund einer Änderung der Suspensionsviskosität zumindest indirekt den mechanischen Energieeintrag.
- Bei der Nachregelung eines oder mehrerer Prozessparameter ist bevorzugt darauf zu achten, dass eine Suspensions-Temperatur und/oder ein Suspensions-Druck am Austrag des Extruders in einem vorgegebenen Toleranzbereich bleibt. Im Bedarfsfall können geeignete Regelungsmaßnahmen getroffen werden, um die Suspensionseigenschaften entsprechend zu gewährleisten. Beispielsweise kann bei einer Änderung des Gesamtdurchsatzes gleichzeitig die Extruderdrehzahl und/oder eine Gehäusetemperatur angepasst werden. So kann beispielsweise gewährleistet werden, dass das Durchsatz-zu-Drehzahl-Verhältnis in einem vorgegebenen Toleranzbereich bleibt.
- Genügen einzelne der obigen Regelungsschritte nicht, um die Elektrodensuspension wieder In-Spec zu bringen, können verschiedene Regelungsschritte einzeln und/oder in Kombination durchgeführt werden. In Falle weitere Regelungsschritte können vorherige Regelungsmaßnahmen zumindest zeitweise rückgängig gemacht werden.
- Lässt sich die detektierte Abweichung nicht durch eine oder mehrere der obigen Regelmaßnahmen beheben, kann beispielsweise auch eine manuelle Inspektion der Anlagenkomponente durch den Bediener erfolgen. Hierdurch können nicht durch die Gerätesteuerungen detektierbare Fehlerquellen, beispielsweise blockierte atmosphärische Entgasungen, verschlissene Gehäuse und/oder Schneckenelemente und/oder Leckagen, aufgefunden werden.

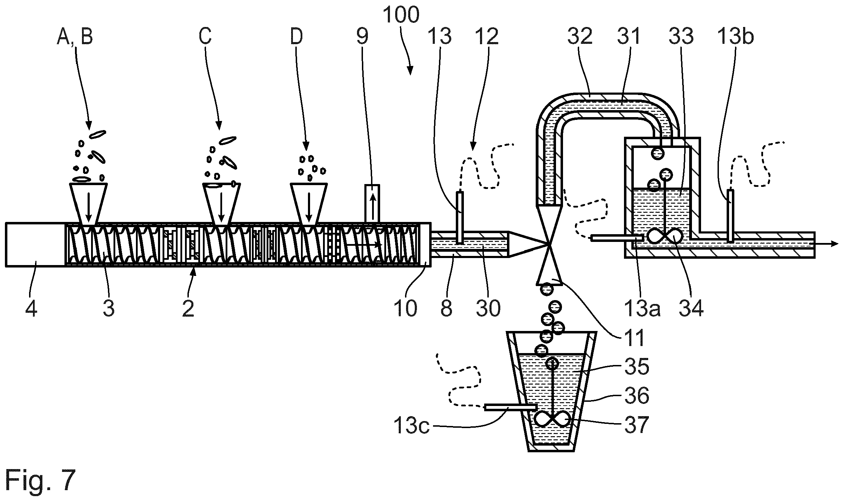

In Fig. 7 ist schematisch ein weiteres Ausführungsbeispiel einer Anordnung 100 zur Herstellung einer Elektrodensuspension gezeigt. Komponenten, die bereits in Bezug auf das Ausführungsbeispiel in Fig. 1 beschrieben wurden, tragen die gleichen Bezugszeichen und sind nicht mehr im Detail erläutert.

Die Anordnung 100 in Fig. 7 entspricht hinsichtlich der Ausgestaltung des Extruders 2 und dessen Steuerung der in Fig. 1 gezeigten Anordnung 1. Der besseren Übersichtlichkeit halber sind Steuereinrichtungen, Regeleinreichtungen, Signalleitungen, usw. nicht nochmals gezeigt.

Anhand des in Fig. 7 gezeigten Ausführungsbeispiels wird eine mögliche Weiterbehandlung der Elektrodensuspension 30 weiter erläutert. Die Elektrodensuspension 30 wird durch den Extruderaustrag 8 des Extruders 2 gefördert und mit Hilfe der Messvorrichtung 12, von der nur der Sensor 13 gezeigt ist, vermessen. Abhängig von der Analyse der entsprechenden Messdaten wird das Mehrwegeventil 11 angesteuert. Erfüllt die Elektrodensuspension 30 eine Soll-Qualität, wird diese über das Mehrwegeventil 11 als In-Spec-Suspension 31 über eine Rohrleitung 32 der weiteren Verarbeitung zugeführt. Im gezeigten Ausführungsbeispiel wird die In-Spec-Suspension 31 zunächst in einem Puffersilo 33 zwischengespeichert. Im Puffersilo 33 wird die In-Spec-Suspension mit Hilfe eines Rührwerks 34 in Bewegung gehalten, um Entmischungseffekte zu minimieren, insbesondere zu vermeiden.

Unterschreitet die Elektrodensuspension 30 die Soll-Qualität, wird diese als Off-Spec-Suspension 35 mit Hilfe des Mehrwegeventils 11 in einen Auffangbehälter 36 geleitet. Die Off-Spec-Elektrodensuspension 35 wird aus dem Verfahren ausgeschleust. Die Off-Spec-Elektrodensuspension 35 kann in dem Auffangbehälter 36 aufbereitet werden, beispielsweise durch die Zudosierung von eventuell fehlenden Rezepturbestandteilen. Zur Vermeidung von Entmischungseffekten und/oder zur weiteren Homogenisierung der Off-Spec-Elektrodensuspension 35 wird diese mit Hilfe eines Rührwerks 37 verrührt. Sollte eine Aufbereitung der Off-Spec-Elektrodensuspension 35 nicht möglich sein, kann diese als Ausschuss ausgeschleust werden und/oder als Ausgangsmaterial in den Prozess zurückgeführt werden.

Die Anordnung 100 weist mehrere Messvorrichtungen 12 auf, von denen Jeweils nur die Sensoren 13, 13a, 13b, 13c gezeigt sind. Hierdurch ist eine optische Messung der Elektrodensuspension an unterschiedlichen Stellen möglich. Hierdurch können insbesondere Änderungen in den Elektrodensuspensionen entlang des Förderwegs des Suspensionsstroms überwacht werden.

Die Sensoren 13a, 13b sind zur Vermessung der In-Line-Elektrodensuspension 31 entlang der Verbindung zwischen dem Mehrwegeventil 11 und weiteren Verarbeitungsstationen (nicht figürlich gezeigt) angeordnet. Der Sensor 13a ist im Bereich des Puffersilos 33 angeordnet. Der Sensor 13a führt eine optische Messung an der im Puffersilo 33 befindlichen In-Spec-Elektrodensuspension 31 durch. Hierdurch können insbesondere Entmischungsprozesse der In-Spec-Elektrodensuspension 31 frühzeitig erkannt werden.

Der Sensor 13b ist in einer Rohrverbindung zwischen dem Puffersilo 33 und weiteren Verarbeitungsstationen angeordnet. Der Sensor 13b vermisst die an die weiteren Verarbeitungsstationen weitergeleitete In-Spec-Elektrodensuspension 31. Hierdurch ist gewährleistet, dass die dem weiteren Verarbeitungsprozess zugeführte Elektrodensuspension tatsächlich die jeweiligen Soll-Eigenschaften, insbesondere die Soll-Qualität, aufweist.

Der Sensor 13c ist dem Auffangbehälter 36 zugeordnet. Mit Hilfe des Sensors 13c kann insbesondere ein Aufbereitungsprozess der Off-Spec-Elektrodensuspension 35 überwacht werden. Insbesondere kann festgestellt werden, ob mit Hilfe der Aufbereitung eine Soll-Eigenschaft, insbesondere eine Soll-Qualität, der Elektrodensuspension erzielt werden kann.

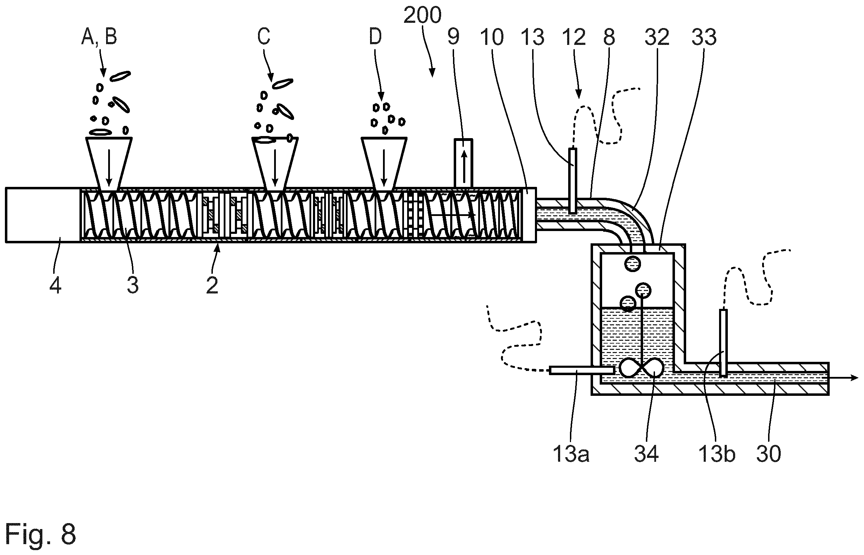

In Fig. 8 ist ein weiteres Ausführungsbeispiel einer Anordnung 200 zur Herstellung einer Elektrodensuspension 30 dargestellt. Komponenten, die in Bezug auf die vorhergehenden Ausführungsbeispiele bereits beschrieben wurden, tragen die gleichen Bezugszeichen und werden nicht nochmal im Einzelnen erläutert.

Die Anordnung 200 unterscheidet sich von der in Fig. 7 beschriebenen Anordnung 100 nur dadurch, dass sich an den Extruderaustrag 8 kein Mehrwegeventil anschließt. Der Extruderaustrag 8 ist direkt an die Rohrleitung 32 angeschlossen, über die die Elektrodensuspension 30 in das Puffersilo 33 eingebracht wird. Ein automatisches Ausschleusen der Elektrodensuspension ist bei der Anordnung 200 nicht vorgesehen.

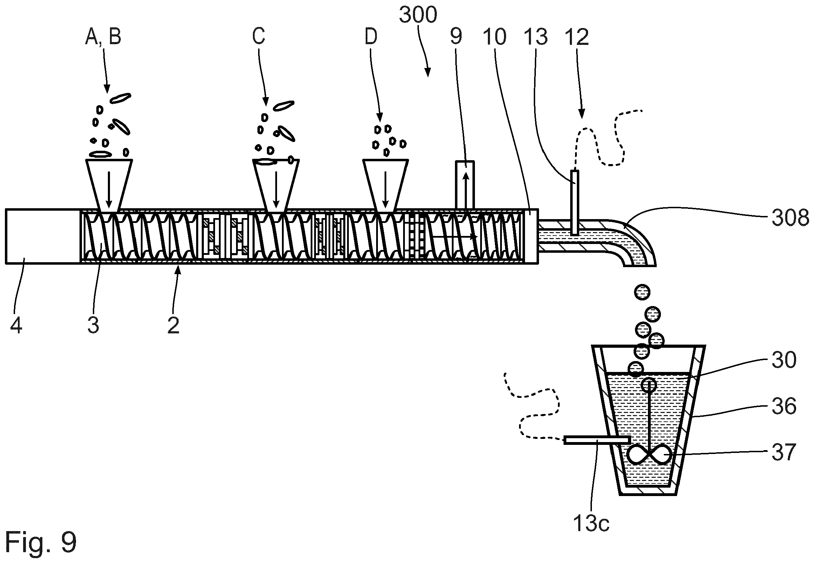

In Fig. 9 ist ein weiteres Ausführungsbeispiel einer Anordnung 300 zur Herstellung einer Elektrodensuspension 30 gezeigt. Komponenten, die denen der vorangehenden Ausführungsbeispiele entsprechen, tragen die gleichen Bezugszeichen und werden nicht nochmals im Detail erläutert.

Die Anordnung 300 weist einen offenen Extruderaustrag 308 auf, über welchen die Elektrodensuspension 30 direkt in den Auffangbehälter 36 eingeleitet wird. Die in dem Auffangbehälter 36 eingeleitete Elektrodensuspension 30 kann dann abhängig von einer Auswertung der Messdaten der Messvorrichtungen, von denen jeweils nur die Sensoren 13 bzw. 13c gezeigt sind, weiterverarbeitet werden. Die Anordnung 300 zeigt daher einen quasi kontinuierlichen Herstellungsprozess, bei dem die Elektrodensuspension 30 kontinuierlich extrudiert wird, dann jedoch batchweise weiterverarbeitet wird.

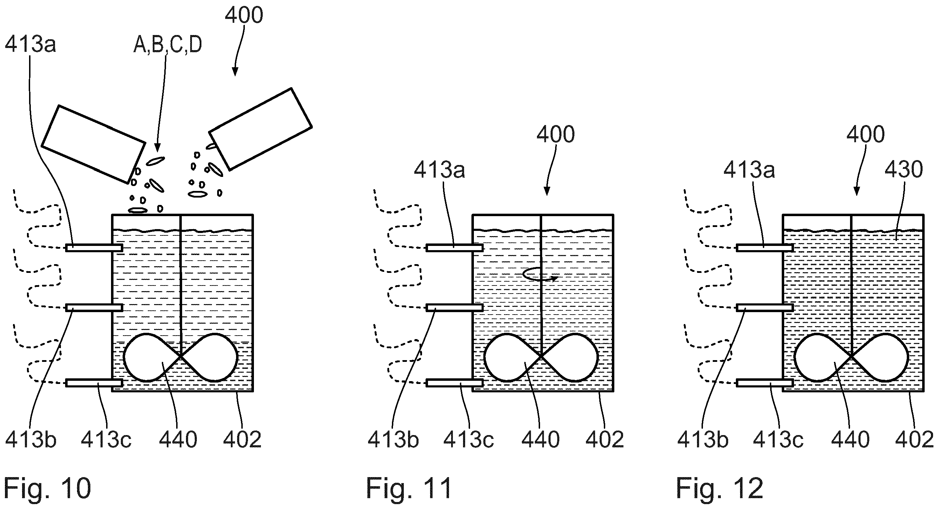

Mit Bezug auf die Fig. 10 bis 12 ist ein weiteres Ausführungsbeispiel einer Anordnung 400 zur Herstellung einer Elektrodensuspension 430 gezeigt.

Die Anordnung 400 dient der batchweisen Herstellung der Elektrodensuspension 430. Die Anordnung 400 weist eine Mischvorrichtung 402 in Form eines Batchmischers auf. Der Batchmischer 402 weist ein Rührwerk 440 auf. Die Anordnung 400 weist mehrere Messvorrichtungen auf, von denen jeweils die Sensoren 413a, 413b, 413c gezeigt sind. Auch eine Auswerteeinheit zur Auswertung der mit Hilfe der Messvorrichtungen erfassten Messdaten ist der Einfachheit halber nicht gezeigt.

Die Sensoren 413a, 413b, 413c sind an unterschiedlichen Positionen an dem Batchmischer 402 angebracht, sodass diese in das Mischvolumen des Batchmischers ragen. Hierdurch kann die Suspension an unterschiedlichen Positionen, insbesondere an unterschiedlichen Höhen, innerhalb des Mischvolumens des Batchmischers 402 vermessen werden.

Mit Hilfe der Sensoren 413a, 413b, 413c wird ein Vermischen der Rezepturbestandteile überwacht. In den Fig. 10 bis 12 sind unterschiedliche Zeitpunkte des Mischvorgangs gezeigt. Die Rezepturbestandteile A, B, C, D der Elektrodensuspension werden in den Batchmischer 402 eingebracht. Das Einbringen der Rezepturbestandteile A, B, C, D ist nur zu Beginn des Prozesses in Fig. 10 schematisch dargestellt. Zusätzlich oder alternativ ist auch möglich Rezepturbestandteile A, B, C, D zu einem späteren Zeitpunkt einzubringen, beispielsweise während des Mischvorgangs, der in Fig. 11 schematisch gezeigt ist. Insbesondere können die Rezepturbestandteile A, B, C, D sukzessive eingebracht werden.

Solange die Rezepturbestandteile noch nicht ausreichend vermischt sind, wie dies insbesondere in Fig. 10 gezeigt ist, erfassen die Messvorrichtungen mit den an unterschiedlichen Positionen angeordneten Sensoren 413a, 413b, 413c unterschiedliche Messdaten, insbesondere unterschiedliche Farbkoordinaten.

In Fig. 11 ist der Mischvorgang während des Drehantriebs des Rührwerks 440 gezeigt. Hierbei werden die Rezepturbestandteile sukzessive zu einer homogenen Elektrodensuspension vermischt. Es ist möglich, während des Mischvorgangs weitere Rezepturbestandteile A, B, C, D einzubringen. Durch die kontinuierliche Messung mit Hilfe der Sensoren 413a, 413b, 413c der Messvorrichtungen können die hierbei erfolgenden Änderungen der Messdaten, insbesondere der Farbkoordinaten, überwacht werden. Durch einen Vergleich der Messdaten der unterschiedlichen Sensoren 413a, 413b, 413c kann auf die Dispergiergüte, insbesondere die Homogenität, der Elektrodensuspension geschlossen werden. So lange Änderungen der Messdaten, insbesondere der Farbkoordinaten und/oder Unterschiede zwischen den Messdaten der jeweiligen Sensoren 413a, 413b, 413c detektiert werden, ist der Mischvorgang nicht abgeschlossen. Zusätzlich können unterschiedliche Farbwerte je Rezepturänderung und/oder Prozessänderung betrachtet werden.

Beim Erreichen statischer Messdaten und/oder übereinstimmende Messdaten der Sensoren 413a, 413b, 413c liegt eine homogene Elektrodensuspension 430 vor, wie es in Fig. 12 gezeigt ist. Die Auswertung der entsprechenden Messdaten kann daher zur Bestimmung des Endes des Mischvorgangs herangezogen werden. Zusätzlich kann über die Auswertung der Messdaten, insbesondere der Farbkoordinaten, eine Soll-Qualität der Elektrodensuspension überprüft werden, insbesondere hinsichtlich der Rezepturbestandteile und/oder deren Mischungsverhältnis.

Abhängig von einer Auswertung der Messdaten kann auch eine Ansteuerung des Rührwerks 440 erfolgen. Beispielsweise kann eine Drehzahl des Rührwerks 440 eingestellt werden. Insbesondere kann eine Dauer der Betätigung des Rührwerks 440 gesteuert werden, um sicherzustellen, dass eine homogene, qualitativ hochwertige Elektrodensuspension 430 hergestellt wird.

## Patentansprüche

1. Verfahren zur Herstellung einer Elektrodensuspension, mit den Schritten:
- Bereitstellen von Rezepturbestandteilen (A, B, C, D) der Elektrodensuspension (30; 430),
- Vermischen der Rezepturbestandteile (A, B, C, D) zu der Elektrodensuspension (30; 430),
- Durchführen mindestens einer optischen Messung an der Elektrodensuspension (30; 430), wobei jeweils ein Spektrum der Elektrodensuspension (30; 430) über zumindest einen Teilbereich des ultravioletten, sichtbaren und/oder infraroten Frequenzbereichs erfasst wird,
- Auswerten der mindestens einen optischen Messung und
- Weiterbehandeln der Elektrodensuspension (30; 430) in Abhängigkeit von der Auswertung.

2. Verfahren nach Anspruch 1, **dadurch gekennzeichnet, dass** die Auswertung anhand mindestens einer aus dem Spektrum ermittelten Farbkoordinate (L^{∗}, a^{∗}, b^{∗}) eines Farbraums, insbesondere anhand eines aus dem Spektrum ermittelten Farborts, erfolgt.

3. Verfahren nach Anspruch 2, **dadurch gekennzeichnet, dass** mindestens eine Farbabweichung der mindestens einen Farbkoordinate (L^{∗}, a^{∗}, b^{∗}) von einer entsprechenden Soll-Farbkoordinate ermittelt wird und eine Weiterbehandlung der Elektrodensuspension (30; 430) in Abhängigkeit von der mindestens Farbabweichung erfolgt.

4. Verfahren nach mindestens einem der vorgenannten Ansprüche, **dadurch gekennzeichnet, dass** die Herstellung der Elektrodensuspension (30; 430) kontinuierlich, insbesondere mittels eines Extruders (2), erfolgt.

5. Verfahren nach mindestens einem der vorgenannten Ansprüche, **dadurch gekennzeichnet, dass** abhängig von der Auswertung eine Mehrwegeweiche (11) zur Umleitung des Suspensionsstroms, insbesondere an einem Extruderaustrag (8), angesteuert wird.

6. Verfahren nach mindestens einem der vorgenannten Ansprüche, **dadurch gekennzeichnet, dass** die mindestens eine optische Messung in-line, insbesondere im Bereich eines Extruderaustrags (8), erfolgt.

7. Verfahren nach mindestens einem der vorgenannten Ansprüche, **dadurch gekennzeichnet, dass** mehrere optische Messungen an unterschiedlichen Positionen durchgeführt werden.

8. Verfahren nach mindestens einem der vorgenannten Ansprüche, **dadurch gekennzeichnet, dass** mehrere optische Messungen nacheinander durchgeführt werden, insbesondere dass die optischen Messungen regelmäßig wiederholt, bevorzugt im Wesentlichen kontinuierlich durchgeführt, werden.

9. Verfahren nach mindestens einem der vorgenannten Ansprüche, **dadurch gekennzeichnet, dass** abhängig von der Auswertung, insbesondere in Abhängigkeit von mindestens einer Farbkoordinate (L^{∗}, a^{∗}, b^{∗}), eine Regelung des Bereitstellens der Rezepturbestandteile (A, B, C, D) und/oder des Mischens der Rezepturbestandteile (A, B, C, D), insbesondere eine Regelung der Prozessparameter eines Extruders (2), erfolgt.

10. Verfahren nach mindestens einem der vorgenannten Ansprüche, **dadurch gekennzeichnet, dass** ein Ergebnis der Auswertung, insbesondere mindestens eine Farbkoordinate (L^{∗}, a^{∗}, b^{∗}), gespeichert wird.

11. Anordnung zur Herstellung einer Elektrodensuspension, aufweisend
- eine Mischvorrichtung (2; 402) zum Vermischen mehrerer Rezepturkomponenten (A, B, C, D) zu der Elektrodensuspension (30; 430),
- mindestens eine Messvorrichtung (12) zur Durchführung mindestens einer optischen Messung an der Elektrodensuspension (30; 430), wobei die mindestens eine Messvorrichtung (12) dazu ausgelegt ist, ein kontinuierliches Spektrum der Elektrodensuspension (30; 430) über zumindest einen Teilbereich des ultravioletten, sichtbaren und/oder infraroten Frequenzbereichs zu erfassen, und
- eine Auswerteeinheit (15) zur Auswertung der mindestens einen optischen Messung.

12. Anordnung nach Anspruch 11, **dadurch gekennzeichnet, dass** die Mischvorrichtung (2) einen Extruder aufweist.

13. Anordnung nach einem der Ansprüche 11 oder 12, **gekennzeichnet durch** eine Mehrwegeweiche (11) zur Umlenkung des Suspensionsstroms, insbesondere an einem Extruderaustrag (8), in Abhängigkeit von der Auswertung der mindestens einen optischen Messung.

14. Anordnung nach mindestens einem der Ansprüche 11 bis 13, **dadurch gekennzeichnet, dass** die mindestens eine Messvorrichtung (12) dazu eingerichtet ist, die Elektrodensuspension in der Mischvorrichtung (2; 402) und/oder an einem Austrag (8) der Mischvorrichtung (2), insbesondere an einem Extruderaustrag (8), zu vermessen.

15. Anordnung nach mindestens einem der Ansprüche 11 bis 14, **gekennzeichnet durch** mehrere an unterschiedlichen Positionen angeordnete Messvorrichtungen (12).

16. Anordnung nach mindestens einem der Ansprüche 11 bis 15, **gekennzeichnet durch** eine Steuereinheit (5) zur Steuerung und/oder Regelung der Mischvorrichtung (2; 402) und/oder einer Weiterbehandlung der Elektrodensuspension (30; 430) in Abhängigkeit von der Auswertung der mindestens einen optischen Messung.

17. Anordnung nach mindestens einem der Ansprüche 11 bis 16, **dadurch gekennzeichnet, dass** die mindestens eine Messvorrichtung (12) ein Spektralphotometer aufweist.
